# EUROPEAN PATENT APPLICATION

(11) **EP 4 398 135 A1**
(43) Date of publication of application: **10.07.2024**
(21) Application number: 22940933.9
(22) Date of filing: 21.11.2022
(51) Int. Cl.: G06F 21/32, G06Q 20/40

(54) **INFORMATION PROCESSING SYSTEM, INFORMATION PROCESSING METHOD, AND INFORMATION PROCESSING PROGRAM**

(71) Applicant: Rakuten Group, Inc., Setagaya-ku Tokyo 158-0094 (JP)
(72) Inventor: KITAMURA, Kazutaka, Tokyo 158 0094 (JP)
(74) Representative: EIP
(86) International application number: PCT/JP2022/043015
(87) International publication number: WO 2024/111023

(57) **Abstract**

An object is to provide an information processing system, an information processing method, and an information processing program that enable identification of a user and check on additional information while reducing a burden on the user.

A Storage means stores thereon first user identification information for identifying the first user of a system, second user identification information for identifying a first user as a second user of a voice communication system enabling voice communication and feature information indicating a first feature of a voice of the first user in association with one another. The system acquires the second user identification information associated with the first user identification matching requester identification information included in processing information indicating details of a request for predetermined processing. Based on the acquired second user identification information, the system causes the system to be connected with a user communication device of the second user identified with the second user identification information for the voice communication. The system receives voice information from the user communication information. The system performs speaker recognition and speech recognition on the voice information and determine whether to permit the predetermined processing.

## Description

### Technical Field

The present invention relates to a system and a method of performing authentication for giving permission for execution of specific processing only for an authorized user.

### Background Art

it is known that there are conventional systems which give permission for execution of specific processing using the system only for authorized users registered in advance. Such systems generally perform authentication, authorization, or identity verification of users who request the processing. For example, some systems perform authentication by making users input identification information registered in advance in the systems as information for identifying the users. Some systems may ask users whether it is true that the users have requested the specific processing. if the user indicates affirmation to notification from the system, the system causes the processing to be executed. If the user indicates negation, the system prohibits execution of the processing. Especially in recent years, there is a growing demand for prevention of an act of impersonating an authorized user. Thus, the systems increasingly request users to make confirmation.

For example, Patent Literature 1 discloses a technique for preventing impersonation using a sender address of an e-mail. An authentication device in this technique is a server device for executing a command described in a sent e-mail. Upon receiving an e-mail, the authentication device sends a check e-mail to the sender of the e-mail. When the authentication device receives a reply e-mail to the check e-mail, the authentication device executes the command described in the initially received e-mail. If a user who received the check e-mail had sent the initial e-mail, the user sends the reply e-mail. If the user had not sent the initial e-mail, the user does not send the reply e-mail.

Patent Literature 2 discloses a technique for preventing unauthorized use of a credit card. In this technique, a card terminal reads personal information recorded in advance in a presented card , and transmits the personal information to a card management device of a card company. The card management device transmits, on the basis of the personal information, transaction data to a mobile terminal of a holder of the card. A person who has the terminal checks the details of the transaction data to determine whether to approve the transaction. Then, the person inputs determination of either approval or disapproval in the mobile terminal. In a case where the transaction is not approved, the card management device transmits, to the card terminal, a signal indicating that the transaction is not approved. In a case where the transaction is approved, the card management device transmits payment data to a payment management device in a payment center, and transmits a signal indicating that the payment processing has been completed to the card terminal. Patent Literature 2 also discloses that a person who has a mobile terminal inputs determination of either approval or disapproval and also inputs a card ID in the mobile terminal, in order to prevent unauthorized use of a card by another person who has obtained the mobile terminal. The card ID is any of a keyword, a fingerprint, an iris pattern, and a voiceprint. In a case where, in the mobile terminal, the transaction is approved and the input card ID matches a card ID registered in advance, the card management device transmits payment data to the payment management device.

### Citation List

### Patent Literatures

Patent Literature 1: JP 2004-295684 A
Patent Literature 2: JP 2002-297920 A

### Summary of Invention

### Technical Problem

However, the conventional techniques require the users' further operations for inputting additional information, which may bother the users. For example, in the technique disclosed in Patent Literature 1, the user needs to cause the check e-mail to be displayed, open a window for creating a reply e-mail, and transmit the reply e-mail. In the technique disclosed in Patent Literature 2, the user needs to input determination of either approval or disapproval, and input the card ID.

The present invention has been made in view of the above point, and an example of an object thereof is to provide an information processing system, an information processing method, and an information processing program that enable identification of a user and check on additional information while reducing a burden on the user.

### Solution to Problem

An aspect of the present invention is an information processing system for permitting predetermined processing, the system comprising: a processing information acquisition means that acquires processing information indicating details of a request for the predetermined processing and including requester identification information for identifying a presumed requester presumed to request the predetermined processing as a user who can use the information processing system; a requester voice communication identification information acquisition means that acquires, based on the requester identification information included in the acquired processing information, requester voice communication identification information for identifying the presumed requester in a voice communication system enabling voice communication; a connection control means that causes, based on the acquired requester voice communication identification information, the information processing system to be connected with a user communication device of the presumed requester for the voice communication; a voice information reception means that receives voice information indicating a first voice input in the user communication device from the user communication device connected with the information processing system for the voice communication; a requester voice feature information acquisition means that acquires, based on the requester identification information included in the acquired processing information, requester voice feature information indicating a feature of a second voice of the presumed requester; a feature determination means that determines whether a feature of the first voice indicated by the received voice information and the feature of the second voice indicated by the acquired requester voice feature information correspond; a speech determination means that determines whether the first voice indicated by the received voice information represents predetermined information; and a permission determination means that determines, based on the determination by the feature determination means and the determination by the speech determination means, whether to permit the predetermined processing.

According to this aspect, the information processing system is connected with the user communication device of the user presumed to have requested the predetermined processing, for the voice communication. The information processing system receives the voice information indicating the voice of the user from the user communication device. It is determined whether the feature of the voice indicated by the received voice information and the feature of the voice indicated by the requester voice feature information considered to indicate the feature of the voice of the presumed requester correspond. The feature of the voice may correspond to identification information for identifying the user. Further, it is determined whether the voice indicated by the received voice information represents the predetermined information. It is determined, on the basis of these determinations, whether to permit the predetermined processing. Thus, after the information processing system is connected with the user communication device, the user is simply required to utter a voice representing the predetermined information. Therefore, it is possible to identify the user and check additional information while reducing a burden on the user.

Another aspect of the present invention is the information processing system, wherein the predetermined information indicates affirmation of the predetermined processing, the first voice indicated by the received voice information represents either the affirmation or negation of the predetermined processing, and the speech determination means determines whether the first voice indicated by the received voice information represents the affirmation or the negation.

According to this aspect, the voice indicated by the received voice information may represent either the affirmation or the negation of the predetermined processing. It is determined whether the voice indicated by the voice information represents the affirmation or the negation. The user uttering the voice representing either the affirmation or the negation can correspond to confirming whether the user has requested the predetermined processing. It is determined, on the basis of the determination of whether the features of the voices correspond and the determination of whether the voice represents the affirmation or the negation, whether to permit the predetermined processing. Thus, after the information processing system is connected with the user communication device, the user is simply required to utter the voice representing either the affirmation or the negation. Therefore, it is possible to identify the user and check whether the user has requested specific processing while reducing a burden on the user.

Yet another aspect of the present invention is the information processing system, wherein the predetermined information is authentication information for authenticating the presumed requester if the presumed requester knows the authentication information.

According to this aspect, it is determined whether the voice indicated by the voice information represents the authentication information. It is determined, on the basis of the determination of whether the features of the voices correspond and the determination of whether the voice represents the authentication information, whether to permit the predetermined processing. Thus, if the user is the presumed requester, the user is simply required to utter the voice representing the authentication information of the presumed requester. Therefore, it is possible to reduce a burden for two-factor input in multi-factor authentication.

Yet another aspect of the present invention is the information processing system, wherein the permission determination means determines to permit the predetermined processing when the feature of the first voice and the feature of the second voice correspond and the first voice represents the predetermined information.

According to this aspect, the predetermined processing is permitted when the user of the user communication device is the presumed requester and the user utters the voice representing the predetermined information.

Yet another aspect of the present invention is the information processing system, wherein the permission determination means determines not to permit the predetermined processing when the feature of the first voice and the feature of the second voice correspond and the first voice does not represent the predetermined information.

According to this aspect, even when the user of the user communication device is the presumed requester, the predetermined processing is not permitted when the user utters the voice not representing the predetermined information.

Yet another aspect of the present invention is the information processing system, wherein the permission determination means determines not to permit the predetermined processing when the feature of the first voice and the feature of the second voice do not correspond and the first voice represents the predetermined information.

According to this aspect, the predetermined processing is not permitted when the user of the user communication device is a person different from the presumed requester, even when the user utters the voice representing the predetermined information.

Yet another aspect of the present invention is the information processing system, further comprising a risk degree determination means that determines, based on the acquired processing information, a degree of risk in executing the predetermined processing, the degree of risk changing in accordance with a probability that the predetermined processing is requested by a person different from the presumed requester, wherein when the determined degree is equal to or greater than a predetermined value, the connection control means causes the information processing system to be connected with the user communication device, and the permission determination means determines whether to permit the predetermined processing based on the determination by the feature determination means and the determination by the speech determination means, and when the determined degree is smaller than the predetermined value, the connection control means does not cause the information processing system to be connected with the user communication device, and the permission determination means determines to permit the predetermined processing.

According to this aspect, the degree of risk in executing the predetermined processing is determined. This risk may be a risk that the predetermined processing might be executed in response to the request from the person different from the presumed requester. When the degree of risk is equal to or greater than the predetermined value, the information processing system is connected with the user communication device, for the voice communication. In this case, the voice information is transmitted from the user communication device to the information processing system. The determination using the voice information is made, and it is determined, on the basis of the determinations, whether the predetermined processing is permitted. In contrast, when the degree of risk is smaller than the predetermined value, the information processing system is not connected with the user communication device for the voice communication. Thus, the voice information is not transmitted to the information processing system. Therefore, the determination using the voice information is not made. In this case, the predetermined processing is permitted. The determination using the voice information is made only when the risk is high. Thus, it is possible to reduce at least one of a burden on the user or a processing load on the information processing system.

Yet another aspect of the present invention is the information processing system, further comprising a generation means that generates, using machine learning, a model that outputs past risk degree information by using a plurality of combinations of past processing information and determination information, the past processing information indicating details of a request for past processing that is predetermined processing for which whether to give permission was determined in a past, the past processing information including past requester identification information for identifying a past presumed requester who was presumed to request the past processing, the determination information indicating whether the past processing was determined to be requested by a person different from the past presumed requester, the past risk degree information indicating a degree of past risk in executing the past processing, the degree of past risk changing in accordance with a probability that the past processing is requested by the person different from the past presumed requester, wherein the risk degree determination means causes, based on the acquired processing information, risk degree information indicating the degree of risk to be output from the generated model.

According to this aspect, the model is trained using the machine learning, by using the past processing information indicating the details of the request for the past processing and the determination information indicating whether the past processing was determined to be requested by the person different from the past presumed requester indicated by the past processing information. As a result of the training, the model is generated that outputs the past risk degree information indicating the degree of past risk in executing the past processing. The past risk may be a risk that the past processing might be executed in response to the request from the person different from the past presumed requester. By training the model, the degree indicated by the past risk degree information output from the model approximates to the determination information. When the determination information indicates that the past processing was determined to be requested by the person different from the past presumed requester, the degree indicated by the past risk degree information increases. When the determination information indicates that the past processing was not determined to be requested by the person different from the past presumed requester, the degree indicated by the past risk degree information decreases. After the model is generated, the risk degree information indicating the degree of risk in executing the predetermined processing is output from the model, on the basis of the processing information. Therefore, it is possible to appropriately determine the degree of risk using the machine learning.

Yet another aspect of the present invention is the information processing system, wherein the predetermined processing includes processing for the presumed requester to pay a medium of exchange to a payee, and the details indicated by the past processing information include at least one of a date when the past processing was requested or a time when the past processing was requested, and the payee.

According to this aspect, it is possible to generate a model that outputs risk degree information indicating a degree of risk in paying the medium of exchange by the presumed requester.

Yet another aspect of the present invention is the information processing system, wherein the generation means calculates, based on the past processing information, a frequency at which the same past presumed requester requested the past processing for the same payee, and generates the model using the frequency and the determination information.

According to this aspect, when the predetermined processing includes the processing for the requester to pay the medium of exchange to the payee, the probability that the person different from the presumed requester has made the request tends to increase as the frequency at which the same presumed requester is presumed to have requested the payment processing for the same payee increases. Therefore, it is possible to appropriately determine the degree of risk by generating a model using this frequency.

Yet another aspect of the present invention is the information processing system, wherein the predetermined processing includes processing for the presumed requester to pay a medium of exchange, the processing information further includes an amount of the medium of exchange to be paid, and the degree of risk to be determined indicates an expected value for an amount of a medium of exchange to be paid in response to the person different from the presumed requester requesting the predetermined processing.

According to this aspect, the risk degree to be determined indicates the expected value for the amount of the medium of exchange to be paid in response to the person different from the presumed requester requesting the predetermined processing. Thus, only when the expected value for the amount of the medium of exchange is equal to or greater than a predetermined value, the determination using the voice information is made. It is determined, on the basis of the determinations, whether the predetermined processing is permitted. Therefore, it is possible to reduce at least one of a burden on the user or a processing load on the information processing system while reducing damage caused by the medium of exchange being paid in an unauthorized manner.

Yet another aspect of the present invention is the information processing system, wherein first user identification information for identifying a first user who can use the information processing system, second user identification information for identifying the first user as a second user who can use the voice communication system, and voice feature information indicating a feature of a voice of the first user are stored in association with one another in a storage means, the requester voice communication identification information acquisition means acquires, as the requester voice communication identification information, the second user identification information associated with the first user identification information matching the acquired requester identification information from the storage means, and the requester voice feature information acquisition means acquires, as the requester voice feature information, the voice feature information associated with the first user identification information matching the acquired requester identification information from the storage means.

According to this aspect, it is possible to acquire the information necessary for the voice communication and the information necessary for the determination from the storage means that stores the information on the user who can use the information processing system.

Yet another aspect of the present invention is the information processing system, further comprising a voice information transmission means that transmits, to the user communication device connected with the information processing system for the voice communication, prompting voice information indicating a voice prompting a statement of either the affirmation or the negation.

According to this aspect, the user communication device outputs, on the basis of the prompting voice information, the voice prompting the statement of either the affirmation or the negation. With this output, it is possible to notify the user of what should be answered.

Yet another aspect of the present invention is the information processing system, wherein the voice indicated by the prompting voice information includes a voice representing at least one of the details indicated by the processing information.

According to this aspect, the user communication device outputs the voice representing at least one of the details of the request for the predetermined processing. With this output, it is possible to assist the user of the user communication device to understand whether the user is the person who has requested the predetermined processing.

Yet another aspect of the present invention is the information processing system, wherein the predetermined processing includes processing for the presumed requester to pay a medium of exchange, and the details indicated by the processing information include at least one of a date when the predetermined processing has been requested, a time when the predetermined processing has been requested, or an amount of the medium of exchange to be paid.

According to this aspect, the user communication device outputs the voice representing at least one of the date when the predetermined processing has been requested, the time when the predetermined processing has been requested, or the amount of the medium of exchange to be paid. With this output, it is possible to assist the user of the user communication device to understand whether the user is the person who has requested the processing for paying the medium of exchange.

Yet another aspect of the present invention is the information processing system, wherein when the predetermined processing is found not to be processing requested by the presumed requester after the permission determination means determines to permit the predetermined processing, the information processing system stores information indicating the feature of the first voice in a non-permission voice feature information storage means as non-permission voice feature information indicating a feature of a voice for which the permission determination means will not permit the predetermined processing in a future.

According to this aspect, when it is later found that the predetermined processing is not the processing requested by the presumed requester, the unauthorized feature information indicating the feature of the voice indicated by the voice information from the user communication device is stored in the unauthorized feature information storage means. Thereafter, when a feature of a voice indicated by voice information transmitted from any one of user communication devices to the information processing system in response to a request for another predetermined processing corresponds to the feature indicated in the unauthorized feature information stored in the unauthorized feature information storage means, the predetermined processing is not permitted. Therefore, it is possible to prevent recurring unauthorized use caused by an unauthorized user impersonating the presumed requester by registering the feature information in an unauthorized manner.

Yet another aspect of the present invention is the information processing system, further comprising an evidence information storage control means that stores, as evidence information indicating evidence that the presumed requester affirmed or negated the predetermined processing, the received voice information in an evidence information storage means in association with the processing information.

According to this aspect, the voice information transmitted from the user communication device to the information processing system is stored as the evidence information. Thereafter, when a business operator operating the information processing system receives an inquiry about the predetermined processing from the presumed requester, the business operator can present the evidence information to the presumed requester. Therefore, it is possible to avoid unnecessary trouble between the business operator and the presumed requester.

Yet another aspect of the present invention is the information processing system, further comprising a second connection control means that causes, for the voice communication, the user communication device to be connected with an operator communication device of an operator that receives an inquiry about the predetermined processing when the permission determination means determines not to permit the predetermined processing.

According to this aspect, when the predetermined processing is not permitted, the user communication device is connected with the operator communication device. With this connection, the user of the user communication device can talk with the operator when the user has a complaint on the determination made by the information processing system.

Yet another aspect of the present invention is the information processing system, wherein the requester voice communication identification information is a phone number, and the user communication device has a telephone function.

According to this aspect, the information processing device can make a phone call to the presumed requester using the phone number.

Yet another aspect of the present invention is the information processing system, wherein the predetermined processing is payment using a predetermined payment method.

According to this aspect, it is possible to prevent unauthorized use of the predetermined payment method due to impersonation.

Yet another aspect of the present invention is the information processing system, wherein the predetermined payment method is payment using a credit card, and the requester identification information is a number of the credit card.

According to this aspect, it is possible to prevent unauthorized use of the credit card due to impersonation.

Yet another aspect of the present invention is an information processing method to be performed by at least one computer of an information processing system for permitting predetermined processing, the method comprising: a processing information acquisition step of acquiring processing information indicating details of a request for the predetermined processing and including requester identification information for identifying a presumed requester presumed to request the predetermined processing as a user who can use the information processing system; a requester voice communication identification information acquisition step of acquiring, based on the requester identification information included in the acquired processing information, requester voice communication identification information for identifying the presumed requester in a voice communication system enabling voice communication; a connection control step of causing, based on the acquired requester voice communication identification information, the information processing system to be connected with a user communication device of the presumed requester for the voice communication; a voice information reception step of receiving voice information indicating a first voice input in the user communication device from the user communication device connected with the information processing system for the voice communication; a requester voice feature information acquisition step of acquiring, based on the requester identification information included in the acquired processing information, requester voice feature information indicating a feature of a second voice of the presumed requester; a feature determination step of determining whether a feature of the first voice indicated by the received voice information and the feature of the second voice indicated by the acquired requester voice feature information correspond; a speech determination step of determining whether the first voice indicated by the received voice information represents predetermined information; and a permission determination step of determining, based on the determination in the feature determination step and the determination in the speech determination step, whether to permit the predetermined processing.

Yet another aspect of the present invention is an information processing program causing at least one computer of an information processing system for permitting predetermined processing to function as: a processing information acquisition means that acquires processing information indicating details of a request for the predetermined processing and including requester identification information for identifying a presumed requester presumed to request the predetermined processing as a user who can use the information processing system; a requester voice communication identification information acquisition means that acquires, based on the requester identification information included in the acquired processing information, requester voice communication identification information for identifying the presumed requester in a voice communication system enabling voice communication; a connection control means that causes, based on the acquired requester voice communication identification information, the information processing system to be connected with a user communication device of the presumed requester for the voice communication; a voice information reception means that receives voice information indicating a first voice input in the user communication device from the user communication device connected with the information processing system for the voice communication; a requester voice feature information acquisition means that acquires, based on the requester identification information included in the acquired processing information, requester voice feature information indicating a feature of a second voice of the presumed requester; a feature determination means that determines whether a feature of the first voice indicated by the received voice information and the feature of the second voice indicated by the acquired requester voice feature information correspond; a speech determination means that determines whether the first voice indicated by the received voice information represents predetermined information; and a permission determination means that determines, based on the determination by the feature determination means and the determination by the speech determination means, whether to permit the predetermined processing.

### Advantageous Effects of Invention

According to the present invention, it is possible to identify a user and check additional information while reducing a burden on the user.

### Brief Description of Drawings

FIG. 1 is a diagram illustrating an example of a schematic configuration of an electronic communication system S according to an embodiment.
FIG. 2 is a block diagram illustrating an example of a schematic configuration of a payment server 1 according to an embodiment.
FIG. 3 is a diagram illustrating examples of information stored in databases.
FIG. 4 is a diagram illustrating an example of functional blocks in a system controller 11 of the payment server 1 according to an embodiment.
FIG. 5 is a diagram illustrating an example of a flow of authorization using telephone.
FIG. 6 is a diagram illustrating an example of a flow of authorization in a case where an authorized cardholder uses a credit card.
FIG. 7 is a diagram illustrating an example of a flow of authorization in a case where an unauthorized user uses a credit card.
FIG. 8 is a diagram illustrating an example of a flow of authorization in a case where a store makes a fraudulent charge.
FIG. 9 is a diagram illustrating an example of a flow of authorization in a case where an unauthorized user uses a credit card.
FIG. 10 is a diagram illustrating an example of generation and an example of usage of a risk degree calculation model 14d.
FIG. 11 is a diagram illustrating an example of a flow of authorization in a case where an unauthorized user uses a credit card.
FIG. 12 is a flowchart illustrating an example of authorization processing executed by the system controller 11 of the payment server 1.
FIG. 13 is a flowchart illustrating the example of the authorization processing executed by the system controller 11 of the payment server 1.

### Description of Embodiments

Hereinafter, embodiments of the present invention will be described in detail with reference to the drawings. An information processing system according to at least one embodiment may be a system for giving permission for predetermined processing for a user who can use the information processing system. The information processing system may include, for example, a plurality of server devices. Alternatively, the information processing system may actually be one server device.

The predetermined processing is not particularly limited as long as the predetermined processing is processing that requires user authentication, authorization, or identity verification for executing the processing. The predetermined processing may be processing that requires multi-factor authentication. A system that executes the predetermined processing is referred to as an execution system. The execution system may be the information processing system or another system. Examples of the predetermined processing include issuance of a certificate or a predetermined card related to the user, login to the execution system, payment by a medium of exchange using a predetermined payment method or settlement of this payment, some processing executable, using the execution system, only by an administrator among users of the execution system, and the like. Examples of the predetermined payment method include payment using a credit card, payment using a debit card, payment using electronic money, payment using a two-dimensional code, payment using points, and the like. Examples of the medium of exchange to be paid include legal currency, electronic money, points, virtual currency, and the like.

In at least one embodiment, the information processing system may store first user identification information for identifying each user who can use the information processing system. The first user identification information may be information given to a user by the information processing system, or may be information registered by the user. Examples of the first user identification information include a membership number, a user ID, a card number given to the user, an e-mail address of the user, a combination of a name and an address of the user, and the like.

In at least one embodiment, the information processing system may be configured to be able to perform voice communication with a user of the information processing system through a predetermined voice communication system. The voice communication system may be a system that enables voice communication via a network. In the voice communication system, for example, a user inputs a voice of the user in a microphone included in a user communication device used by the user. The user communication device transmits voice information indicating the input voice to another user communication device. The other user communication device that has received the voice information outputs a voice indicated by the voice information from a speaker. In a case where the information processing system receives voice information from a user communication device, the information processing system may perform speaker recognition and speech recognition using the voice information. Examples of the voice communication include telephone, voice chat, video chat, and the like. Examples of the telephone system include fixed-line phone, mobile phone, IP phone, Internet telephone, video phone, and the like. The voice communication system may store second user identification information for identifying each user who can use the voice communication system. The user who uses the voice communication system, or the information processing system can call a user identified by the second user identification information by designating the second user identification information as information indicating the callee. The second user identification information may be information given to a user by the information processing system, or may be information registered by the user. In a case where at least one of fixed-line phone, mobile phone, or IP phone is used, the second user identification information may be a phone number. Alternatively, the second user identification information may be information for identifying a user's account in a social networking service (SNS) that enables Internet phone, chat, or the like. each user communication device may be association with second user identification information of a user of the user communication device. For example, the voice communication system may associate the second user identification information with a communication line for connecting the voice communication system with each user communication device. Alternatively, the second user identification information may be stored in a non-volatile memory such as a subscriber identity module (SIM) card, a hard disk drive, a solid state drive (SSD), or the like included in the user communication device. The voice communication system may store information for identifying the user communication device and the second user identification information in association with each other by receiving, from the user communication device, the second user identification information stored in the non-volatile memory. The information processing system may store, for at least one user among the users who can use the information processing system, second user identification information of the at least one user. For example, the information processing system may store the first user identification information and the second user identification information in association with each other.

In at least one embodiment, the information processing system may store, for at least one user among the users for each of whom the second user identification information has been stored in association with the first user identification information, voice feature information indicating a feature of a voice of the user. The voice feature information is used for identifying who has uttered the voice. The feature of a voice may be, for example, an individual-specific feature. The voice feature information may be, for example, information indicating a voiceprint. For example, the information processing system may receive voice information indicating a voice of a user from the user communication device, and may generate, on the basis of the voice information, voice feature information. For example, the information processing system may perform Fourier transform on the voice information to generate a spectrum of frequency for each predetermined duration. The information processing system may generate a time series of these spectra as a spectrogram. The information processing system may store information indicating the spectrogram as voice feature information.

In at least one embodiment, a requester who desires a predetermined processing requests the predetermined processing or takes an action corresponding to the request. There may be a case where the requester may be a user who can be authorized to request the predetermined processing, or a case where the requester may be a person who impersonates the user to use the information processing system in an unauthorized manner. The requester inputs or presents first user identification information of a user who is presumed to be a person who requests the predetermined processing. For example, the requester may input the first user identification information in a device held by the requester or another device. Alternatively, the requester may present a predetermined object holding the first user identification information. Examples of the predetermined object include a card, a mobile terminal, and the like. For example, the first user identification information may be recorded in an integrated circuit (IC) chip included in the card or the mobile terminal. Alternatively, the first user identification information may be recorded on the magnetic tape of the card. Alternatively, a one-dimensional code, a two-dimensional code, or a character string indicating the first user identification information may be printed on the card. Alternatively, the first user identification information may be stored in a memory included in the mobile terminal. Then, the mobile terminal may cause the first user identification information to be displayed on a screen in response to operation performed by the user.

In at least one embodiment, the information processing system acquires processing information indicating details of a request for predetermined processing. The information processing system may receive the processing information from a terminal device held by a requester. Alternatively, the information processing system may receive the processing information from a device used by someone who has received a request from the requester. Alternatively, the information processing system may receive the processing information from a server device that has received a request from the terminal device held by the requester. The processing information may include at least presumed requester identification information. The presumed requester identification information may be first user identification information of a user who is presumed to have requested the predetermined processing. The user indicated by the presumed requester identification information is referred to as a presumed requester. In a case where a requester is different from the presumed requester, there is a possibility that the requester is an unauthorized user. The processing information may include information input by a requester at the time of a request. The processing information may further include at least one of a date or a time when a request has been received. In a case where the predetermined processing includes processing for a presumed requester to pay a medium of exchange, the processing information may further include at least one of the amount of the medium of exchange to be paid, information for identifying the payee, or information for identifying a target to be transacted. The target to be transacted may be at least one of an item for sale or a service. The processing information may further include information for identifying a device that has transmitted the processing information. Examples of the information for identifying the device include a media access control (MAC) address, an Internet protocol (IP) address, a hypertext transfer protocol (HTTP) cookie transmitted from the information processing system, and the like.

In at least one embodiment, when the information processing system acquires the processing information, the information processing system may perform authentication or authorization using voice communication. The information processing system may cause, using second user identification information of a presumed requester identified by presumed requester identification information included in the processing information, the information processing system to be connected with a user communication device of the user via the voice communication system. For example, the information processing system may transmit the second user identification information to the voice communication system as information for identifying a callee. Through this transmission, the information processing system may request connection between the voice communication system and a user communication device. After the connection with the user communication device, the user of the user communication device may utter a voice representing predetermined information determined by the information processing system to input the voice in the user communication device. For example, the user utters a voice representing at least one of affirmation or negation of the predetermined processing, and examples of words indicating the affirmation include "Yes", "That's right", and the like. Examples of words indicating the negation include "No", "That's not true", and the like. The user communication device may transmit voice information indicating the voice to the information processing system. The information processing system may perform speaker recognition and speech recognition on the voice information received from the user communication device to determine whether to give permission for the predetermined processing. Here, the information processing system may determine whether the voice indicated by the voice information represents the predetermined information. The predetermined information may indicate affirmation, for example.

The user of the information processing system is simply required to utter a voice representing at least one of affirmation or negation, after the user communication device is connected with the information processing system. With this action, the voice information is input, which is information for identifying the user and is information indicating whether the user has requested the predetermined processing. Thus, it is possible to reduce a burden on the user.

In at least one embodiment, the information processing system may perform authentication or authorization using voice communication, each time the information processing system acquires processing information. Alternatively, the information processing system may determine, on the basis of the processing information, a degree of risk in executing the predetermined processing. The degree of risk may be a degree changing in accordance with a probability that a person different from a presumed requester has requested the predetermined processing. That is, the degree of risk may change in accordance with a probability of unauthorized use of the information processing system. The information processing system may perform authentication or authorization using voice communication only in a case where the degree of risk is equal to or greater than a predetermined threshold value. As a result, the voice communication is performed only in a case where the possibility of unauthorized use is relatively high. Thus, it is possible to reduce a burden on the user, and it is also possible to reduce a processing load on the information processing system. The information processing system may determine or calculate the risk degree using, for example, machine learning, a statistical method, or a predetermined rule.

Hereinafter, an embodiment will be described that is an embodiment in a case where the present invention is applied to a system that enables processing of payment using a credit card, as the predetermined processing.

### 1. Configuration of Communication System

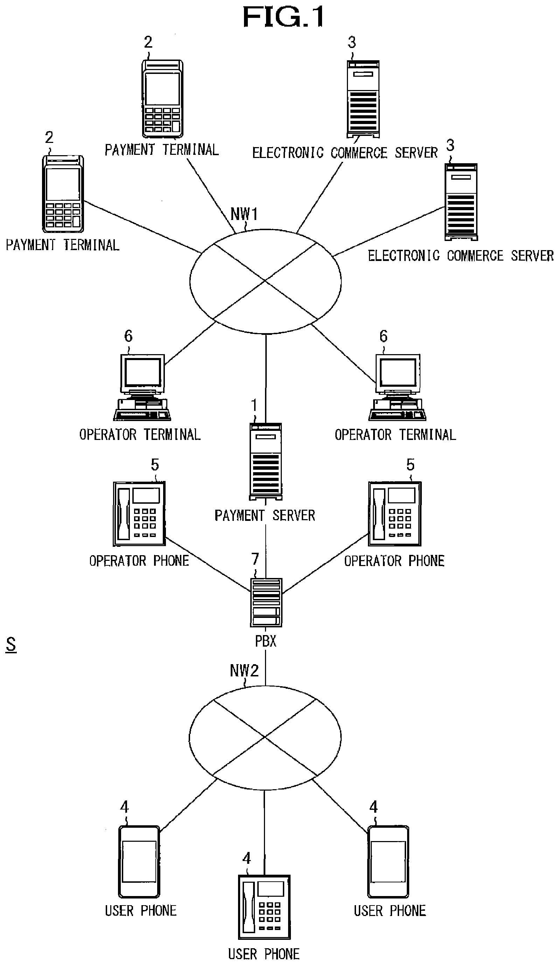

First, a configuration of an electronic communication system S according to the present embodiment will be described with reference to FIG. 1. FIG. 1 is a diagram illustrating an example of a schematic configuration of the electronic communication system S according to the present embodiment.

As illustrated in FIG. 1, the electronic communication system S includes a payment server 1, a plurality of payment terminals 2, a plurality of electronic commerce servers 3, a plurality of user phones 4, a plurality of operator phones, a plurality of operator terminals 6, and a private branch exchange (PBX) 7. The payment server 1, each payment terminal 2, each electronic commerce server 3, and each operator terminal 6 are connected to a network NW1. The network NW1 may be a network mainly for data communication. The network NW1 may include, for example, the Internet, a dedicated communication line (for example, a community antenna television (CATV) line), a public switched telephone network, a mobile communication network (including a base station and the like), a gateway, and the like. In addition, the payment server 1 and each operator phone 5 are connected to the PBX 7. Further, the PBX 7 and each user phone 4 are connected to a network NW2. The network NW2 may be a network mainly for voice communication. The network NW2 may include, for example, a public switched telephone network, an IP phone network, a mobile communication network, and the like. The network NW2 may overlap with the network NW1. The payment server 1 may be directly connected to the network NW2.

The payment server 1 may be a payment system as an example of the information processing system. The payment system is a system that enables payment using a predetermined credit card. Alternatively, the payment server 1 may be any one of a plurality of devices included in the payment system. The payment server 1 may be installed by a credit card company that issues the predetermined credit card. The payment server 1 may be a server device that determines whether to give permission for payment processing using the predetermined credit card. In addition, the payment server 1 may perform payment using the predetermined credit card or secure credit for future payment using the credit card. The payment server 1 may be, for example, a system including a plurality of server devices. The payment server 1 may be capable of performing data communication with the payment terminals 2 and the electronic commerce servers 3 via the network NW1. In addition, the payment server 1 may be capable of performing voice communication with the user phones 4 via the PBX 7 and the network NW2. The payment server 1 may store the phone numbers of respective holders of the predetermined credit cards. The phone number is an example of the second user identification information.

The payment server 1 may receive an authorization request from the payment terminal 2 or the electronic commerce server 3 when someone has purchased or has intended to purchase a transaction target using a credit card. The authorization request may be information indicating a request for authorization of payment using a credit card. The authorization request may include payment information. The payment information is an example of the processing information. The payment information is information indicating details of payment for which the authorization has been requested. The payment information may include, for example, a date, a time, a card number, a credit card expiration date, information for identifying a payee of the payment, and information for identifying an ordered transaction target. The card number is an example of the first user identification information. The card number is a 14- to 16-digit number printed on the credit card. The card number is also referred to as a payment account number, a primary account number, or a membership number. The transaction target may be at least one of an item for sale or a service. In response to receiving payment information, the payment server 1 may determine whether to give permission for payment whose details are indicated by the payment information.

Each payment terminal 2 is a terminal device placed in a physical store. The physical store provides customers with transaction targets. Each payment terminal 2 may be a terminal device in which information on a credit card and an amount of payment are input when a customer makes payment using the credit card. Each payment terminal 2 may include a reading unit for reading information from an IC chip or a magnetic tape on a credit card, a numeric keypad, a display, and the like. At least one payment terminal 2 may be a cash register. Each payment terminal 2 may transmit payment information including a card number and an expiration date read from a credit card to the payment server 1.

Each electronic commerce server 3 is a server device that manages an electronic commerce site, which is a website for making transactions for transaction targets. Examples of the electronic commerce site include an online shopping mall, a digital content sales site, another type of online shopping site, an accommodation reservation site, a golf course reservation site, an event admission ticket sales site, another type of service reservation site, and the like. Each electronic commerce server 3 may store information on a user who can use the electronic commerce server 3. For example, each electronic commerce server 3 may store information about the credit card used by the user. The information about a credit card may include, for example, a card number, an expiration date, a name of a cardholder, and the like. Each electronic commerce server 3 may transmit a web page regarding electronic commerce to a terminal device used by a user in response to a request from the terminal device. Examples of the terminal device used by a user include a personal computer, a tablet computer, a smartphone, a mobile phone, a personal digital assistant (PDA), a set-top box, and the like. At least one of the terminal devices used by the users may be the user phone 4. In addition, each electronic commerce server 3 executes processing for receiving an order of a transaction target from a terminal device of a user. In a case where a credit card is selected as a payment method of payment by a user, the electronic commerce server 3 may transmit payment information including information about a credit card of the user to the payment server 1.

Each user phone 4 is a phone that can be connected using a phone number stored in the payment server 1 as a phone number of a holder of the predetermined credit card. Each user phone 4 may include a handset (or a headset), buttons, a display, and the like. The buttons included in the user phone 4 may be hardware buttons or software buttons. Examples of the user phone 4 include a fixed-line phone, a mobile phone, an IP phone, and the like.

Each operator phone 5 is a phone used by a corresponding one of operators working at a call center of the credit card company. The operator receives an inquiry about the predetermined credit card by telephone. For example, the operator may receive a report on unauthorized use of a credit card from a cardholder, and may receive a complaint on determination, made by the payment server 1, as to whether to give permission for payment. In addition, the operator may receive an application for reissuance of a credit card, and may suggest to a cardholder that the cardholder register a user's voiceprint. Examples of the operator phone 5 include a fixed-line phone, an IP phone, a personal computer in which softphone is incorporated, and the like.

Each operator terminal 6 is a terminal device used by the operator described above. By using the operator terminal 6, the operator may be able to cause information stored in the payment server 1 to be displayed, and may be able to change the information stored in the payment server 1. Examples of the operator phone 5 include a personal computer, a tablet computer, and the like. The operator terminal 6 may also serve as the operator phone 5.

The PBX 7 may be an exchange for connecting the payment server 1 or the operator phones 5 with the user phones 4 via external lines. For example, when a user makes a phone call using the user phone 4 with the phone number of the call center, the PBX 7 may transmit a signal indicating an incoming call to at least one operator phone 5. When the operator performs operation of receiving the incoming call, the PBX 7 may connect the user phone 4 with the operator phone 5. In addition, for example, the payment server 1 may transmit, to the PBX 7, a signal indicating the phone number of a cardholder stored in the payment server 1. The PBX 7 may connect, by transmitting the signal indicating the phone number received from the payment server 1 to a subscriber line exchange or the like in the network NW2, the user phone 4 corresponding to the phone number with the payment server 1. In addition, the PBX 7 may transfer a call between the payment server 1 and the user phone 4 to any one of the operator phones 5, in response to a request from the payment server 1. The PBX 7 may be installed, for example, in the call center, or may be implemented through cloud computing.

### 2. Configuration of Payment Server

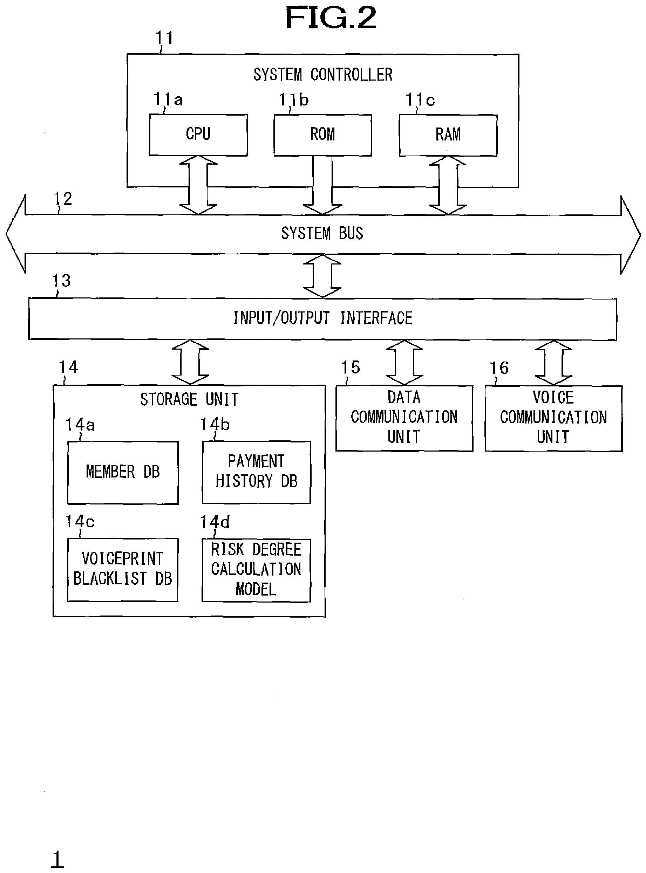

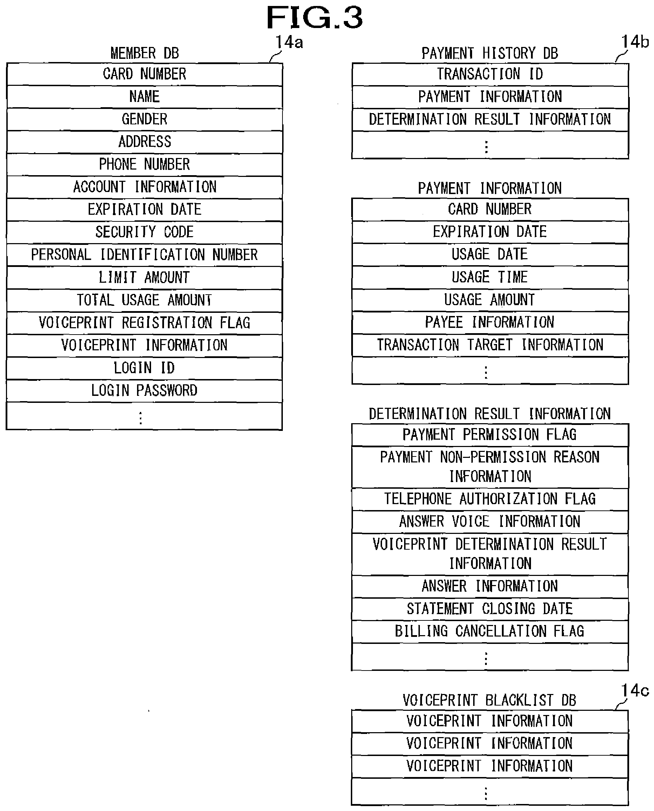

Next, a configuration of the payment server 1 will be described with reference to FIGS. 2 and 3. FIG. 2 is a block diagram illustrating an example of a schematic configuration of the payment server 1 according to the present embodiment. As illustrated in FIG. 2, the payment server 1 includes a system controller 11, a system bus 12, an input/output interface 13, a storage unit 14, a data communication unit 15, and a voice communication unit 16. The system controller 11 and the input/output interface 13 are connected via the system bus 12.

The system controller 11 includes a central processing unit (CPU) 11a, a read only memory (ROM) 11b, a random access memory (RAM) 11c, and the like.

The input/output interface 13 executes interface processing between each of the storage unit 14, the data communication unit 15, and the voice communication unit 16, and the system controller 11.

The storage unit 14 includes, for example, a hard disk drive or the like. The storage unit 14 stores databases including a member DB 14a, a payment history DB 14b, a voiceprint blacklist DB 14c, and the like. "DB" is an abbreviation for database.

FIG. 3 is a diagram illustrating examples of information stored in the databases. The member DB 14a stores membership information on users who own the predetermined credit cards, for each of the members. For example, the member DB 14a may store, as the membership information, a card number, a name, a gender, an address, a phone number, account information, a credit card expiration date, a security code, a personal identification number, a limit amount, a total usage amount, a voiceprint registration flag, voiceprint information, a login ID, a login password, and the like, in a manner in association with each other. The card number is information for identifying a member. The name, gender, address, phone number, and account information are information presented by a user. A plurality of phone numbers may be stored for a single user. The account information is information on a bank account owned by a user. The account information may include, for example, a bank name, a branch name, an account type, an account number, a name of an account holder, and the like. The limit amount is the upper limit of the amount that allows a user to make payment using the credit card within a billing cycle of one month. The total usage amount indicates the total amount of payment made by a user within the current billing cycle. The voiceprint registration flag indicates whether voiceprint information of a user is stored in the member DB 14a. The voiceprint registration flag set to TRUE indicates that the voiceprint information is stored. The voiceprint registration flag set to FALSE indicates that the voiceprint information is not stored. The voiceprint information is information indicating the voiceprint of the user. The voiceprint information is an example of the voice feature information. The login ID is identification information for identifying a user in a member's website of the predetermined credit card. In the member's website, each user can check a usage statement and change information such as an address, a phone number, account information, and the like. The login password is a password for a user to log in to the member's website. For example, the user can log in to the website by inputting the login ID and the login password on a login web page.

At a point in time when a person becomes a user of the predetermined credit card, the voiceprint information of the user is not stored in the member DB 14a. The user can register the voiceprint information as necessary. For example, in the member's website, a brochure of the predetermined credit card, or other media, invitation for registration of voiceprint information and the phone number of the call center may be displayed. Alternatively, an operator who has received an inquiry from a user may suggest to the user that the user register voiceprint information. When a user makes a phone call to the call center with the user phone 4, identity verification may be performed according to operator's guidance or according to automated voice guidance. In this identity verification, the user may present information such as a card number, an expiration date, a name, an address, a phone number, and the like. The operator or the payment server 1 determines whether the information presented by the user matches the information stored in the member DB 14a. After the identity verification has been performed, the user utters words for voiceprint information. The user may be guided to utter both a word indicating affirmation and a word indicating negation, as the words for the voiceprint information. Each of the word indicating affirmation and the word indicating negation may be determined in advance. The voice information indicating the voice of the user is transmitted from the user phone 4 to the payment server 1 via the network NW2. The payment server 1 generates voiceprint information from the voice information. The payment server 1 stores the voiceprint information in the member DB 14a in association with the card number of the user. In addition, the payment server 1 changes the voiceprint registration flag to TRUE. Note that the payment server 1 may be configured to allow voiceprint information to be registered in the member's website. Further, the payment server 1 may be configured to allow a user to update or re-register the voiceprint. A feature of a user's voice may change over time.

The payment history DB 14b stores a history of payment information. For example, each time the payment server 1 receives payment information from the payment terminal 2 or the electronic commerce server 3, the payment history DB 14b may store a transaction ID, the payment information, and determination result information in association with each other. The transaction ID is identification information for identifying a transaction corresponding to the payment information.

The payment information may include a card number, an expiration date, a usage date, a usage time, a usage amount, payee information, transaction target information, and the like. The card number indicates a card number of a credit card used for payment. This card number is information for identifying a user who is presumed to request payment using a credit card. The expiration date is an expiration date of a credit card used for payment. The usage date indicates a date when the request for usage of a credit card has been received. The usage time indicates a time when the request for usage of a credit card has been received. The usage amount indicates an amount to be paid. The payee information is information for identifying a payee receiving money or the like through a credit card. The payee may be, for example, a store or an electronic commerce site at which a credit card has been used. The payee may be a payment agency company. The transaction target information is identification information for identifying a transaction target purchased using a credit card. In some cases, at least one of the payee information or the transaction target information may not be included in the payment information.

The determination result information is information indicating results of various determinations for the payment information. The determination result information may include, for example, a payment permission flag, payment non-permission reason information, a telephone authorization flag, answer voice information, voiceprint determination result information, answer information, a statement closing date, a billing cancellation flag, and the like. The payment permission flag is information indicating whether the payment server 1 has given permission for payment. The payment permission flag set to TRUE indicates that the payment has been permitted. The payment permission flag set to FALSE indicates that the payment has not been permitted. The payment non-permission reason information is information indicating a reason, in a case where payment has not been permitted, why the payment has not been permitted. Examples of the reason why payment is not permitted include a fact that a card number is not an authorized number, a fact that the expiration date has passed, a fact that the total usage amount exceeds the limit amount, a fact that the authorization using telephone has failed, and the like. The telephone authorization flag indicates whether the authorization using telephone has been performed. The telephone authorization flag set to TRUE indicates that the authorization using telephone has been performed. The telephone authorization flag set to FALSE indicates that the authorization using telephone has not been performed. The answer voice information is voice information received by the payment server 1 from the user phone 4 in the authorization using telephone. The voiceprint determination result information is information indicating a result of determination as to whether a voiceprint identified from the answer voice information is a voiceprint of an authorized cardholder identified by the card number included in the payment information. The voiceprint determination result information set to OK indicates that the voiceprint identified from the answer voice information is the voiceprint of the authorized cardholder. The voiceprint determination result information set to NG indicates that the voiceprint identified from the answer voice information is not the voiceprint of the authorized cardholder. The answer information indicates whether an answer recognized from the answer voice information indicates affirmation or negation. The statement closing date indicates which billing cycle's billing includes the billing for a usage amount indicated by the payment information. The statement closing date indicates the date of the last day of the billing cycle. After the statement closing date, a usage statement is mailed to a user, or the user can review the usage statement on the member's website. The billing cancellation flag indicates whether, after payment has been permitted, the billing of a usage amount indicated by the payment information has been canceled. The billing cancellation flag set to TRUE indicates that the billing has been canceled. The billing cancellation flag set to FALSE indicates that the billing has not been canceled. For example, a user who has reviewed the usage statement of a credit card reports, to the call center, a transaction considered to have been subjected to unauthorized use of the credit card, among transactions indicated by the usage statement. In response to this report, the billing for the transaction is canceled, and the billing cancellation flag is changed to TRUE.

The storage unit 14 further stores various programs such as an operating system, a database management system (DBMS), a server program, and the like. The server program is a program that causes the system controller 11 to execute various processing related to payment of a credit card. For example, the server program may be acquired from another device via a network NW. Alternatively, the server program may be recorded on a recording medium such as a magnetic tape, an optical disk, a memory card, or the like, and may be read via a drive device.

Further, the storage unit 14 may store a risk degree calculation model 14d. The risk degree calculation model 14d is a model for calculating the risk degree of the payment processing. Further, the storage unit 14 may store a model for speaker recognition and a model for speech recognition. The model for speaker recognition may be a model for converting voice information from the user phone 4 into voiceprint information and calculating similarity between certain voiceprint information and other voiceprint information. The model for speech recognition may include, for example, an acoustic model for extracting phonemes from voice information, a dictionary model for converting the phonemes into characters, a language model for generating sentences from the characters, and the like.

The data communication unit 15 may include, for example, a communication interface circuit and the like. The data communication unit 15 is connected with devices such as the payment terminals 2, the electronic commerce servers 3, the operator terminals 6, or the like, via the network NW1, and performs data communication with the connected device.

The voice communication unit 16 may include, for example, a communication interface circuit and the like. The voice communication unit 16 is connected to the PBX 7 (or the network NW2), and is also connected to user phones 4 via the PBX 7. The voice communication unit 16 performs voice communication with the connected user phones 4. Note that the data communication unit 15 may also serve as the voice communication unit 16.

### 3. Functional Overview of System Controller

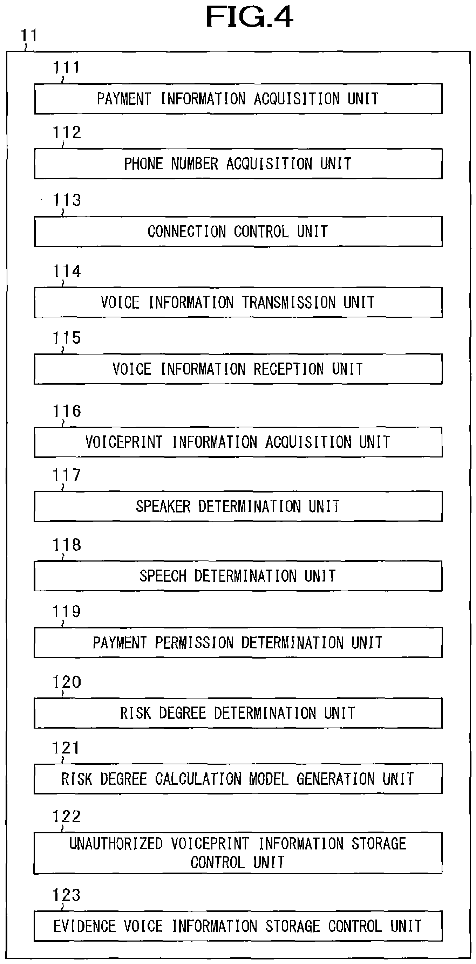

Next, a functional overview of the system controller 11 of the payment server 1 will be described with reference to FIGS. 4 to 11. FIG. 4 is a diagram illustrating an example of functional blocks in the system controller 11 of the payment server 1 according to the present embodiment. The system controller 11 may function as, by the CPU 11a reading and executing various program codes included in the server program, a payment information acquisition unit 111, a phone number acquisition unit 112, a connection control unit 113, a voice information transmission unit 114, a voice information reception unit 115, a voiceprint information acquisition unit 116, a speaker determination unit 117, a speech determination unit 118, a payment permission determination unit 119, a risk degree determination unit 120, a risk degree calculation model generation unit 121, an unauthorized voiceprint information storage control unit 122, an evidence voice information storage control unit 123, and the like, as illustrated in FIG. 4.

### 3-1. Authorization Using Telephone

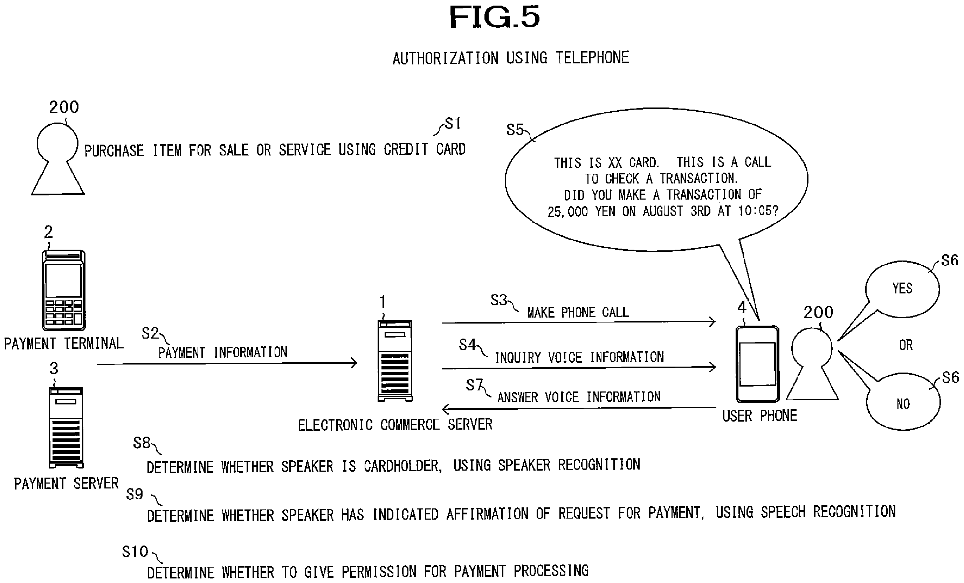

The payment information acquisition unit 111 acquires, for payment processing requested to be executed, payment information indicating the details of the request. The payment information includes at least a card number for identifying a presumed requester presumed to be a person who has requested the execution of the payment processing as a user who can use the predetermined credit card. FIG. 5 is a diagram illustrating an example of a flow of authorization using telephone. The payment information acquisition unit 111 may receive the payment information from the payment terminal 2 or the electronic commerce server 3, for example. As illustrated in FIG. 5, a cardholder 200 attempts to purchase an item for sale or a service using a credit card at, for example, a physical store or an electronic commerce site (step S1). The payment terminal 2 or the electronic commerce server 3 transmits the payment information to the payment server 1 (step S2).

The phone number acquisition unit 112 acquires, on the basis of the card number included in the payment information acquired by the payment information acquisition unit 111, a phone number for identifying the presumed requester in a telephone system. For example, the phone number acquisition unit 112 may acquire, from the member DB 14a, a phone number associated with the card number matching the card number included in the payment information.

The connection control unit 113 causes, on the basis of the phone number acquired by the phone number acquisition unit 112, the payment server 1 to be connected with the user phone 4 of a second user identified by the phone number, for voice communication. For example, the connection control unit 113 may transmit the acquired phone number to the PBX 7 as a destination number. The PBX 7 may transmit the destination number received from the payment server 1 to, for example, the subscriber line exchange in the public switched telephone network in the network NW2. The network NW2 identifies the user phone 4 of a callee according to the destination number. Then, the network NW2 transmits a signal indicating the incoming call to the user phone 4. The user phone 4 outputs a ringtone. In FIG. 5, the callee is the cardholder 200. In this manner, the payment server 1 makes a phone call to the cardholder 200 (step S3). The callee performs operation of answering the call. In response to this operation, the payment server 1 is connected with the user terminal 4 of the callee.

There is a case where the callee does not answer the call even after a predetermined time elapses. There is a case where the phone number acquired by the phone number acquisition unit 112 is not currently used by anyone. In these cases, the payment processing may not be permitted. Alternatively, the connection control unit 113 may determine whether a plurality of phone numbers associated with the card number matching the card number included in the payment information acquired by the payment information acquisition unit 111 is stored in the member DB 14a. In a case where a plurality of phone numbers is stored, the payment information acquisition unit 111 may attempt connection using a phone number different from the phone number used first.

The voice information transmission unit 114 transmits, to the user terminal 4 connected with the payment server 1 for the voice communication, inquiry voice information indicating a voice prompting a statement of either affirmation or negation of the payment processing (step S4). The inquiry voice information may be encoded by conforming to a predetermined standard, for example. Examples of this standard include G.711, G.722, G.726, GSM, Speex, Opus, and the like. The user phone 4 that has received the inquiry voice information from the payment server 1 outputs an inquiry voice indicated by the inquiry voice information from a handset or a speaker. The inquiry voice information may indicate a voice representing a predetermined message. The predetermined message may include a message "Did you make a transaction using the XX card?". The "XX card" is the name of the predetermined credit card. Further, the predetermined message may include "Please answer 'Yes' or *'*No‴. Note that the word indicating affirmation may be a word different from "Yes", and the word indicating negation may be a word different from "No". Further, the voice indicated by the inquiry voice information may include a voice representing at least one of the details of the payment processing indicated by the payment information acquired by the payment information acquisition unit 111. By the user phone 4 making the callee hear at least one of the details of the payment processing, the callee can determine whether the callee has requested the handling payment processing. For example, the inquiry voice indicated by the inquiry voice information may represent at least one of the usage date, the usage time, or the usage amount. The inquiry voice may not include either the card number or the expiration date. In FIG. 5, the user phone 4 outputs an inquiry voice representing "This is XX card. This is a call to check a transaction. Did you make a transaction of 25,000 yen on August 3rd at 10:05?" (step S5).

The voice information reception unit 115 receives, from the user terminal 4 connected with the payment server 1 for the voice communication, answer voice information indicating an answer voice representing either affirmation or negation of the payment processing. For example, the callee who has heard the inquiry voice may utter "Yes" or "No" (step S6). The user phone 4 may convert the uttered voice into an electrical signal, and convert the electrical signal into the answer voice information using a codec conforming to a predetermined standard. The user phone 4 transmits the answer voice information to the payment server 1 via the network NW2 (step S7).

The voiceprint information acquisition unit 116 acquires, on the basis of the card number included in the payment information acquired by the payment information acquisition unit 111, voiceprint information indicating the feature of the voice of the presumed requester. For example, the voiceprint information acquisition unit 116 may acquire, from the member DB 14a, the voiceprint information associated with the card number matching the card number included in the payment information.

The speaker determination unit 117 determines whether the feature of the answer voice indicated by the answer voice information received by the voice information reception unit 115 and the feature of the voice indicated by the voiceprint information acquired by the voiceprint information acquisition unit 116 correspond. That is, the speaker determination unit 117 may determine whether the speaker (callee) is an authorized cardholder identified by the card number in the payment information (step S8) . The fact that the features of voices correspond may mean that the features of the voices match or are similar. Alternatively, the fact that the features of voices correspond may mean that similarity between the features of the voices is equal to or greater than a predetermined value. The speaker determination unit 117 may generate answer voiceprint information indicating a voiceprint of the answer voice, from the answer voice information, using, for example, speaker recognition. The speaker determination unit 117 may calculate similarity between the answer voiceprint information, and the voiceprint information stored in the member DB 14a. The calculated similarity may be, for example, cosine similarity. In a case where the similarity is equal to or greater than the predetermined value, the speaker determination unit 117 may determine that the features of the voices correspond. In a case where the similarity is smaller than the predetermined value, the speaker determination unit 117 may determine that the features of the voices do not correspond.

The speech determination unit 118 determines whether the answer voice indicated by the answer voice information received by the voice information reception unit 115 represents predetermined information. For example, the speech determination unit 118 determines whether the answer voice represents affirmation or negation. That is, the speech determination unit 118 determines whether the speaker has affirmed that the speaker requested the payment processing (step S9). The speech determination unit 118 may determine whether the answer voice represents affirmation or negation using, for example, speech recognition. For example, the speech determination unit 118 may generate information indicating the feature of the voice from the answer voice information. The generated information may be voiceprint information or other information. The speech determination unit 118 may extract phonemes from the generated information. The speech determination unit 118 may identify a character corresponding to each phoneme or each combination of phonemes. The speech determination unit 118 may generate, from the identified character string, answer text information indicating words according to the language of the country. The speech determination unit 118 may compare the generated answer text information with each of text information indicating affirmation and text information indicating negation to determine whether the answer voice represents affirmation or negation.

The payment permission determination unit 119 determines, on the basis of the determination result made by the speaker determination unit 117 and the determination result made by the speech determination unit 118, whether to give permission for the payment processing (step S10). Specifically, the payment permission determination unit 119 may give permission for the payment processing, in a case where the speaker determination unit 117 determines that the features of the voices correspond and the speech determination unit 118 determines that the answer voice represents the predetermined information. For example, the payment permission determination unit 119 may give permission for the payment processing, in a case where the speaker determination unit 117 determines that the features of the voices correspond and the speech determination unit 118 determines that the answer voice represents affirmation. That is, in a case where it is determined that an authorized cardholder affirmed the request for the payment processing, the payment processing is executed. The payment processing in this case is considered to be based on the authorized use of the credit card.

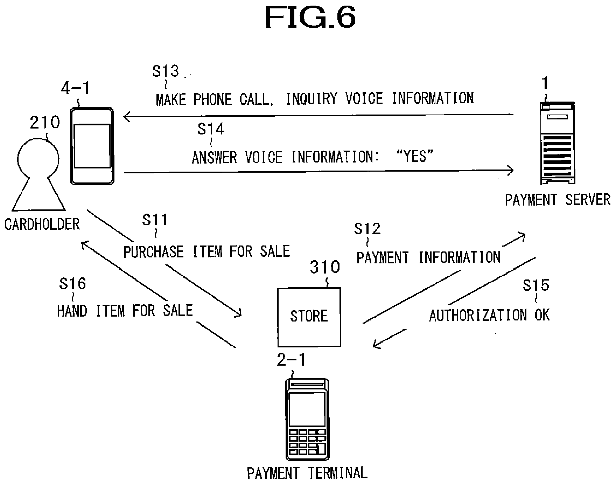

FIG. 6 is a diagram illustrating an example of a flow of authorization in a case where an authorized cardholder uses a credit card. As illustrated in FIG. 5, a cardholder 210 attempts to purchase an item for sale using a credit card at a store 310 (step S11). A payment terminal 2-1 placed in the store 310 reads the card number and the expiration date from the credit card. In addition, the usage amount is input in the payment terminal 2-1. The payment terminal 2-1 transmits the payment information including the card number, the expiration date, and the usage amount to the payment server 1 (step S12). The payment server 1 makes a phone call to the cardholder 210 on the basis of the phone number of the cardholder 210. The cardholder 210 receives the call with a user phone 4-1 owned by the cardholder 210. When the payment server 1 is connected with the user phone 4-1, the payment server 1 transmits inquiry voice information to the user phone 4-1 (step S13). The cardholder 210 utters a word "Yes" representing affirmation. Thus, the user phone 4-1 transmits, to the payment server 1, answer voice information indicating an answer voice representing affirmation (step S14). The voiceprint of the voice indicated by the answer voice information corresponds to the voiceprint of the cardholder 210, and the answer voice represents affirmation. Therefore, the payment server 1 gives permission for the payment. The payment server 1 executes the payment processing, and transmits a response indicating authorization OK to the payment terminal 2-1 (step S15) . In response to the response from the payment server 1 indicating authorization OK, the payment terminal 2-1 displays a message indicating that the authorization has succeeded on its display. The store clerk of the store 310 who has seen the message has the item for sale to the cardholder 210.

The payment permission determination unit 119 may not give permission for payment processing, in a case where the speaker determination unit 117 determines that the features of voices correspond and the speech determination unit 118 determines that an answer voice does not represent the predetermined information. For example, the payment permission determination unit 119 may not give permission for the payment processing, in a case where the speaker determination unit 117 determines that the features of the voices correspond and the speech determination unit 118 determines that the answer voice represents negation. That is, in a case where an authorized cardholder has indicated negation of the request for the payment processing, the payment processing is not executed. The person who requests execution of the payment processing is considered to be an unauthorized user who has obtained information about a credit card in an unauthorized manner.

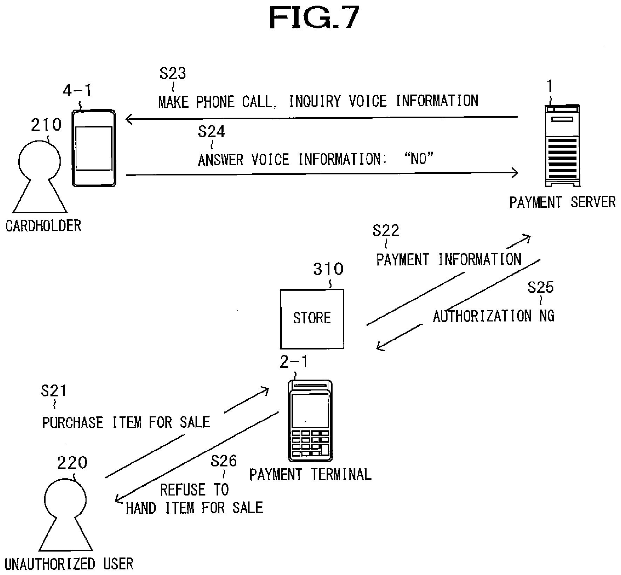

FIG. 7 is a diagram illustrating an example of a flow of authorization in a case where an unauthorized user uses a credit card. In FIG. 7, an unauthorized user 220 has obtained an authorized credit card in an unauthorized manner. Alternatively, the unauthorized user 220 may have obtained information about the credit card owned by the cardholder in an unauthorized manner. Then, the unauthorized user 220 may have counterfeited the credit card. On the other hand, the membership information of the cardholder 210 stored in the member DB 14a of the payment server 1 is not changed at all by the unauthorized user 220. The unauthorized user 220 attempts to purchase an item for sale using the credit card at the store 310 (step S21) . The payment terminal 2-1 placed in the store 310 transmits the payment information to the payment server 1 (step S22). The payment server 1 makes a phone call to the cardholder 210 on the basis of the phone number of the cardholder 210. When the payment server 1 is connected with the user phone 4-1, the payment server 1 transmits inquiry voice information to the user phone 4-1 (step S24) . The cardholder 210, who has no recollection of having used the credit card, utters a word "No" indicating negation. Thus, the user phone 4-1 transmits, to the payment server 1, answer voice information indicating an answer voice representing negation (step S24) . The voiceprint of the voice indicated by the answer voice information corresponds to the voiceprint of the cardholder 210, and the answer voice represents negation. Therefore, the payment server 1 does not give permission for the payment. The payment server 1 transmits a response indicating authorization NG to the payment terminal 2-1 (step S25). In response to the response from the payment server 1 indicating authorization NG, the payment terminal 2-1 displays a message indicating that the authorization has failed on its display. The store clerk of the store 310 who has seen the message refuses to hand the item for sale to the unauthorized user 220 (step S26).

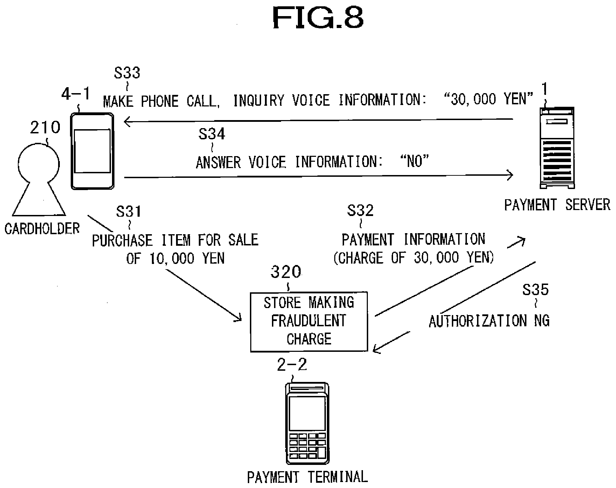

FIG. 8 is a diagram illustrating an example of a flow of authorization in a case where a store makes a fraudulent charge. In FIG. 8, the cardholder 210 attempts to purchase an item for sale with a price of 10,000 yen using a credit card at a store 320 (step S31). Thus, the usage amount is 10,000 yen. However, the store clerk of the store 320 has input 30,000 yen as the usage amount in a payment terminal 2-2. Thus, the payment terminal 2-2 transmits the payment information including the usage amount of 30,000 yen to the payment server 1 (step S32). The payment server 1 makes a phone call to the cardholder 210. When the payment server 1 is connected with the user phone 4-1, the payment server 1 transmits inquiry voice information to the user phone 4-1 (step S33). The user phone 4-1 outputs, on the basis of the inquiry voice information, an inquiry voice indicating that the usage amount is 30,000 yen. The cardholder 210 has no recollection of having attempted to purchase an item for sale of 30,000 yen, and thus the cardholder 210 utters the word "No" representing negation. Therefore, the user phone 4-1 transmits, to the payment server 1, answer voice information indicating an answer voice representing negation (step S34). As in the case of FIG. 7, the payment server 1 does not give permission for the payment, and transmits a response indicating authorization NG to the payment terminal 2-2 (step S35) .

The payment permission determination unit 119 may not give permission for payment processing, in a case where the speaker determination unit 117 determines that the features of voices do not correspond and the speech determination unit 118 determines that an answer voice represents the predetermined information. For example, the payment permission determination unit 119 may not give permission for the payment processing, in a case where the speaker determination unit 117 determines that the features of the voices do not correspond and the speech determination unit 118 determines that the answer voice represents affirmation. That is, in a case where it is determined that an unauthorized user has indicated affirmation of a request for the payment processing, the payment processing is not executed.

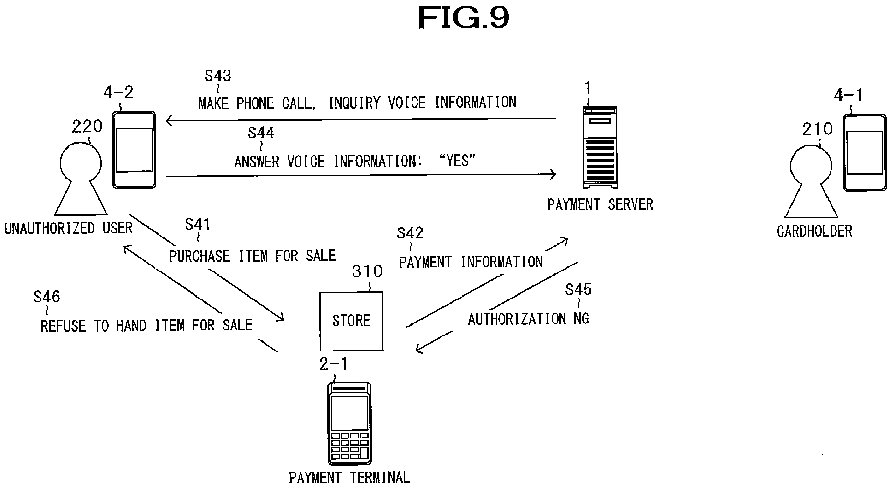

FIG. 9 is a diagram illustrating an example of a flow of authorization in a case where an unauthorized user uses a credit card. In FIG. 9, the unauthorized user 220 has obtained a credit card in an unauthorized manner, or has counterfeited the credit card. In addition, the phone number of the cardholder 210 in the membership information of the cardholder 210 stored in the member DB 14a has been changed to the phone number of the unauthorized user 220. For example, the unauthorized user 220 may have obtained the login ID and the login password of the cardholder 210 in an unauthorized manner to log in to the member's website. The phone number can be changed in the member's website. Alternatively, the unauthorized user 220 may have obtained the user phone 4-1 in an unauthorized manner. In this case, it can be said that the phone number of the cardholder 210 is substantially the phone number of the unauthorized user 220. The unauthorized user 220 attempts to purchase an item for sale using a credit card at the store 310 (step S41). The payment terminal 2-1 placed in the store 310 transmits the payment information to the payment server 1 (step S42). The payment server 1 makes a phone call to the unauthorized user 220 on the basis of the phone number of the unauthorized user 220 included in the membership information of the cardholder 210. When the payment server 1 is connected with a user phone 4-2 owned by the unauthorized user 220, the payment server 1 transmits inquiry voice information to the user phone 4-2 (step S43). The unauthorized user 220 utters the word "Yes" representing affirmation, and the user phone 4-1 transmits, to the payment server 1, answer voice information indicating an answer voice representing affirmation (step S44). The voiceprint of the voice indicated by the answer voice information does not correspond to the voiceprint of the cardholder 210, and the answer voice represents affirmation. Therefore, the payment server 1 does not give permission for the payment. The payment server 1 transmits a response indicating authorization NG to the payment terminal 2-1 (step S45). The store clerk of the store 310 refuses to hand the item for sale to the unauthorized user 220 (step S46).

The payment permission determination unit 119 may not give permission for payment processing, in a case where the speaker determination unit 117 determines that the features of voices do not correspond and the speech determination unit 118 determines that an answer voice represents negation.

### 3-2. Control of Authorization Using Risk Degree

The risk degree determination unit 120 may determine, on the basis of payment information acquired by the payment information acquisition unit 111, a degree of risk in executing payment processing. This degree of risk may be a degree corresponding to a probability that a person different from a presumed requester has requested the payment processing. That is, the degree of risk may be a degree corresponding a probability of unauthorized use of a credit card. In a case where a credit card is subjected to unauthorized use, there may be a case where the payment information suggests this fact.

The degree of risk may indicate the probability of unauthorized use itself. Alternatively, the degree of risk may indicate an expected value for an amount to be paid in response to a person different from a presumed requester requesting payment processing. That is, the degree of risk may indicate an expected value for an amount to be paid by unauthorized use of a credit card.

The risk degree determination unit 120 may determine whether the determined degree of risk is equal to or greater than a predetermined threshold value. In a case where the degree of risk is equal to or greater than the threshold value, the connection control unit 113 may cause the payment server 1 to be connected with the user phone 4. After the connection, the speaker determination unit 117 may determine, on the basis of answer voice information transmitted from the user phone 4, whether the features of voices correspond. Further, the speech determination unit 118 may determine, on the basis of the answer voice information, whether the answer voice represents affirmation or negation. Then, the payment permission determination unit 119 may determine, on the basis of the determination made by the speaker determination unit 117 and the determination made by the speech determination unit 118, whether to give permission for the payment processing.

In a case where the degree of risk is smaller than the threshold value, the connection control unit 113 may not cause the payment server 1 to be connected with the user phone 4. That is, the payment server 1 does not make a phone call. In this case, neither the determination by the speaker determination unit 117 nor the determination by the speech determination unit 118 is made. Then, the payment permission determination unit 119 may determine to give permission for the payment processing.

The risk degree determination unit 120 may determine a degree of risk using the risk degree calculation model 14d. The risk degree calculation model 14d is a model that outputs, from payment information, risk degree information indicating a degree of risk in executing payment processing corresponding to the payment information. The risk degree determination unit 120 may determine a degree of risk on the basis of the risk degree information output from the risk degree calculation model 14d.

The risk degree calculation model generation unit 121 may generate the risk degree calculation model 14d. For example, the risk degree calculation model generation unit 121 may generate the risk degree calculation model 14d using machine learning. The risk degree calculation model 14d may be, for example, a classifier. This classifier may be capable of binary classification, for example. The risk degree calculation model 14d may include a neural network. The structure of the neural network is not particularly limited. The neural network may include, for example, a plurality of fully connected layers and activation functions, and the like.

The risk degree calculation model generation unit 121 may generate the risk degree calculation model 14d by using, as training data, a plurality of combinations each formed by payment information indicating the details of a request for past payment processing, which is payment processing for which whether to give permission was determined in the past, and determination information indicating whether the past payment processing was determined to be processing requested by a person different from a past presumed requester identified by a card number included in the payment information. The payment information corresponds to a question, and the determination information corresponds to a correct answer. The determination in the past may be, for example, determination made by the payment permission determination unit 119 or determination made by an operator. The past in this case refers to a time before generation of the risk degree calculation model 14d is performed. The payment information indicating the details of the past payment processing is stored in the payment history DB 14b. The determination information may indicate a probability desired in accordance with the input payment information, as the probability of unauthorized use of a credit card. Thus, the determination information may be set to any one of zero or one, for example. The determination information set to zero indicates that it was not determined that the past payment processing is processing requested by a person different from the past presumed requester. The determination information set to one indicates that it was determined that the past payment processing is processing requested by a person different from the past presumed requester. The determination information may be generated using the determination result information stored in the payment history DB 14b in association with the payment information. For example, the risk degree calculation model generation unit 121 may set the determination information to zero, in a case where the payment permission flag is set to TRUE and the billing cancellation flag is set to FALSE. The risk degree calculation model generation unit 121 may set the determination information to one, in a case where the payment permission flag is set to TRUE and the billing cancellation flag is set to TRUE. The risk degree calculation model generation unit 121 may set the determination information to one, in a case where the payment permission flag is set to FALSE and the payment non-permission reason information indicates that the authorization using telephone failed. In a case where the payment non-permission reason information indicates any other reason, the risk degree calculation model generation unit 121 may exclude payment information associated with the determination result information from the training data. The risk degree calculation model generation unit 121 may generate the risk degree calculation model 14d, using only payment information for which a predetermined number of days or more has elapsed after the statement closing date, among the payment information stored in the payment history DB 14b. A cardholder can review the usage statement after the statement closing date. The cardholder can check whether the credit card has been subjected to unauthorized use by checking the usage statement. In a case where unauthorized use is found, the cardholder typically reports the unauthorized use to the credit card company. As a result, the billing cancellation flag is changed from FALSE to TRUE.

The risk degree calculation model generation unit 121 may train the risk degree calculation model 14d such that a probability output from the risk degree calculation model 14d in accordance with payment information input to the risk degree calculation model 14d approximates a probability indicated by the determination information corresponding to the payment information.

As described above, the risk degree information output from the risk degree calculation model 14d may indicate the probability of unauthorized use of a credit card, or the expected value for the amount to be paid in an unauthorized manner. In a case where the risk degree information indicates the expected value for the amount, for example, the risk degree calculation model generation unit 121 may calculate the expected value by multiplying the probability of unauthorized use of the credit card by a usage amount included in payment information.

The risk degree calculation model generation unit 121 may generate other information from payment information. The risk degree calculation model generation unit 121 may generate the risk degree calculation model 14d, using at least one of the payment information or the generated information as training data. Alternatively, the risk degree calculation model 14d may generate another piece of information. For example, the risk degree calculation model generation unit 121 may calculate a frequency at which the same past presumed requester is presumed to have requested past payment processing for the same payee. This frequency is referred to as a usage frequency. Then, the risk degree calculation model generation unit 121 may generate the risk degree calculation model 14d using the calculated usage frequency. For example, the risk degree calculation model generation unit 121 may acquire a card number and payee information from payment information. The risk degree calculation model generation unit 121 may search for one or more pieces of payment information each including a combination that the same as the combination of the acquired card number and payee information. In addition, the risk degree calculation model generation unit 121 may acquire at least one of a usage date or a usage time from each of the one or more pieces of the payment information. The risk degree calculation model generation unit 121 may calculate a usage frequency, on the basis of at least one of the usage date or the usage time included in each of the one or more pieces of the payment information including the same combinations. For example, the risk degree calculation model generation unit 121 may identify an extraction period on the basis of at least one of each usage date or each usage time. For example, the risk degree calculation model generation unit 121 may identify a date a predetermined number of days before a usage date included in payment information of interest, as the start date of the extraction period. In addition, the risk degree calculation model generation unit 121 may identify the usage date included in the payment information of interest, as the end date of the extraction period. Alternatively, the risk degree calculation model generation unit 121 may identify a date and time a predetermined time before a usage date and time included in the payment information of interest, as the start date and time of the extraction period. In addition, the risk degree calculation model generation unit 121 may identify the usage date and time included in the payment information of interest, as the end date and time of the extraction period. The risk degree calculation model generation unit 121 may extract one or more pieces of payment information each including a usage date or a usage date and time included in the extraction period, from pieces of the payment information including the respective same combinations having the same card number and the same payee information. The risk degree calculation model generation unit 121 may count the number of pieces of found payment information as a usage frequency regarding the payment information of interest. By generating the risk degree calculation model 14d using a usage frequency, it is possible to obtain a risk degree suitable for a pattern of unauthorized use of a credit card.

It has been reported that there is a high possibility of an unauthorized user using a credit card multiple times in an unauthorized manner at the same store, and that there tends to be relatively high in unauthorized use of credit cards in terms of the number of times. Of course, among authorized cardholders, there are some cardholders who each use the credit card in an authorized manner at the same store or the same electronic commerce site with a high frequency. At the same time, authorized cardholders often use their credit cards as first-time customers at stores or electronic commerce sites that they have never used before. In addition, there are also cardholders each exhibiting a relatively low frequency in using the credit card in an authorized manner at the same store or the same electronic commerce site. Therefore, when a frequency at which the same person uses the credit card at the same store or the same electronic commerce site exceeds a certain level, an increase may occur in a possibility that the credit card has been used in an unauthorized manner.

The risk degree calculation model generation unit 121 may update the risk degree calculation model 14d periodically or non-periodically after generation of the risk degree calculation model 14d. For example, the risk degree calculation model generation unit 121 may retrain the risk degree calculation model 14d, on the basis of the payment information and the determination result information stored in the payment history DB 14b after generation of the risk degree calculation model 14d.

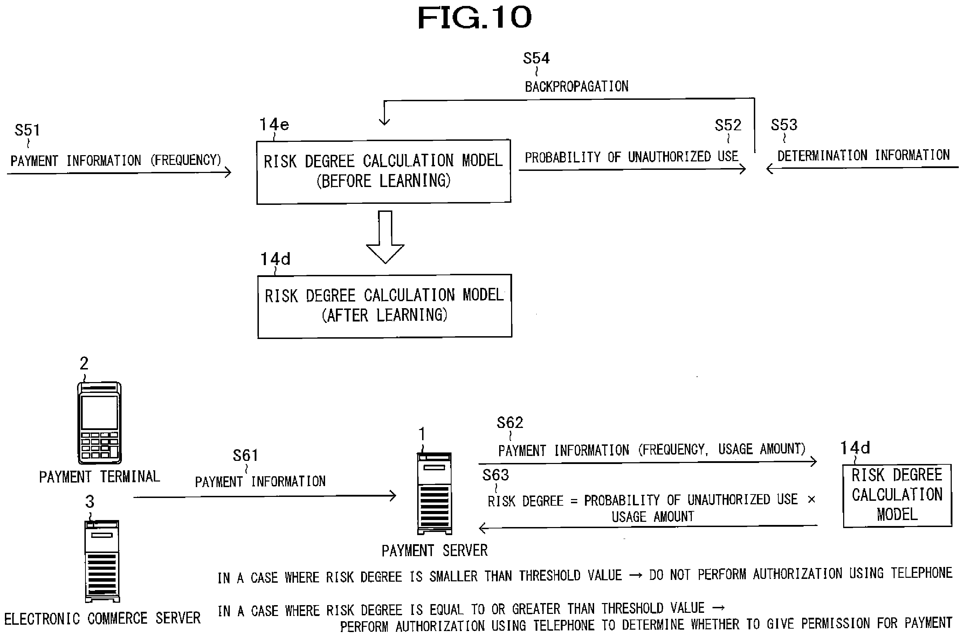

FIG. 10 is a diagram illustrating an example of generation and an example of usage of the risk degree calculation model 14d. As illustrated in FIG. 10, first, a risk degree calculation model 14e before learning may be stored in, for example, the storage unit 14 of the payment server 1. The risk degree calculation model generation unit 121 may acquire payment information and determination result information from the payment history DB 14b. The risk degree calculation model generation unit 121 may calculate a usage frequency from the payment information. The risk degree calculation model generation unit 121 may input the payment information or the usage frequency in the risk degree calculation model 14e. The risk degree calculation model 14e may calculate a probability of unauthorized use in accordance with the input payment information or the input usage frequency (step S52). The risk degree calculation model generation unit 121 may generate determination information indicating zero or one from the determination result information (step S53). The risk degree calculation model generation unit 121 may calculate an error between the probability output from the risk degree calculation model 14d and the determination information, using a loss function or a cost function. The risk degree calculation model generation unit 121 may perform backpropagation (step S54). By performing this, the risk degree calculation model generation unit 121 may update parameters held by the risk degree calculation model 14e. Then, the risk degree calculation model generation unit 121 may minimize the loss function or the cost function. By performing this, the probability output from the risk degree calculation model approximates the probability indicated by the determination information corresponding to the payment information. By using machine learning in this manner, the risk degree calculation model generation unit 121 may generate the risk degree calculation model 14d after learning.

In a case where authorization is performed, the payment terminal 2 or the electronic commerce server 3 transmits the payment information to the payment server 1 (step S61). The risk degree determination unit 120 may calculate a usage frequency, on the basis of the received payment information and payment information stored in the payment history DB 14b. The risk degree determination unit 120 may input the usage frequency and a usage amount in the risk degree calculation model 14d. The risk degree calculation model 14d may calculate the probability of unauthorized use in accordance with the input usage frequency. Then, the risk degree calculation model 14d may calculate a risk degree by multiplying the probability of unauthorized use by the usage amount (step S63) . In a case where the risk degree is smaller than the threshold value, the payment server 1 may not perform authorization using telephone. The payment server 1 may give permission for the payment in a case where the payment information satisfies other necessary conditions. In a case where the risk degree is equal to or greater than the threshold value, the payment server 1 may perform authorization using telephone. Then, the payment server 1 may determine, on the basis of the results of speaker recognition and speech recognition, whether to give permission for the payment.

The risk degree calculation model generation unit 121 may generate the risk degree calculation model 14d, using another piece of information, in addition to the payment information or in place of the payment information. For example, in a case where a credit card is used at an electronic commerce site, the risk degree calculation model generation unit 121 may acquire and record the IP address of a terminal device that has requested the use of the credit card. The risk degree calculation model generation unit 121 may calculate the number of different credit cards requested to be used from a single IP address. The risk degree calculation model generation unit 121 may generate, using the number of credit cards, the risk degree calculation model 14d. An increase in the number of used credit cards indicates a higher possibility of unauthorized use. In addition, the risk degree calculation model generation unit 121 may calculate the number of days elapsed from when a user who used a credit card last updated the membership information until when the credit card was used. Examples of the information that can be updated by the user include a name, a gender, an address, a phone number, account information, a personal identification number, a limit amount, a total usage amount, a voiceprint registration flag, a login ID, a login password, and the like. The risk degree calculation model generation unit 121 may generate, using the number of days, the risk degree calculation model 14d. A reduction in the number of days elapsed from when the membership information was updated until when the credit card was used indicates a higher possibility of unauthorized use. The risk degree determination unit 120 may calculate the risk degree, using the number of credit cards requested to be used from a single IP address or the number of days elapsed from when the membership information was updated until when the credit card was used.

### 3-3. Others

In a case where payment processing is found not to be processing requested by a presumed requester after the payment permission determination unit 119 determines to give permission for the payment processing, the unauthorized voiceprint information storage control unit 122 may store, in the voiceprint blacklist DB 14c, voiceprint information generated from answer voice information received by the voice information reception unit 115, as voiceprint information indicating a feature of a voice for which the payment permission determination unit 119 will not give permission for the payment processing in the future. For example, the answer voice information received by the voice information reception unit 115 may be stored in the payment history DB 14b, in association with the payment information, by the evidence voice information storage control unit 123. In a case where the payment permission determination unit 119 determines to give permission for the payment processing, the payment permission flag stored in the payment history DB 14b is set to TRUE. Thereafter, the presumed requester who has reviewed the usage statement may report to the call center that the transaction for which the payment processing has been performed is an unauthorized transaction. For example, the presumed requester may notify an operator of the call center of information such as a usage date, a usage amount, a payee, and the like of the unauthorized transaction. The operator may input, in the operator terminal 6, the information provided from the presumed requester, and may inquire of the payment server 1 about the transaction corresponding to the provided information. The payment server 1 may search the payment history DB 14b for the payment information and the determination result information of the unauthorized transaction. The payment server 1 may change the billing cancellation flag included in the found determination result information to TRUE. Further, the payment server 1 may add the answer voice information included in the found determination result information to the voiceprint blacklist DB 14c.

The payment permission determination unit 119 may determine not to give permission for payment processing, in a case where a feature of a voice indicated by answer voice information received by the voice information reception unit 115 corresponds to a feature indicated by any of pieces of the voiceprint information stored in the voiceprint blacklist DB 14c.

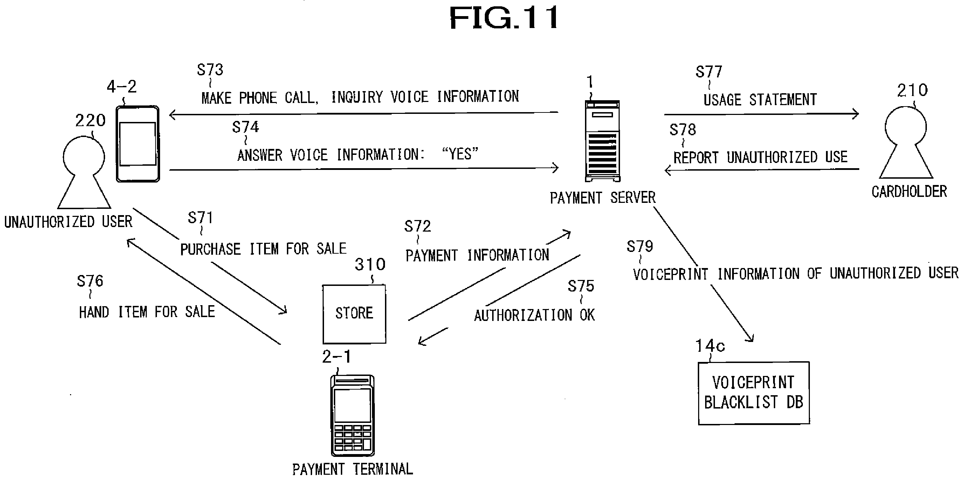

FIG. 11 is a diagram illustrating an example of a flow of authorization in a case where an unauthorized user uses a credit card. In FIG. 11, the unauthorized user 220 has obtained a credit card in an unauthorized manner, or has counterfeited the credit card. In addition, the phone number of the cardholder 210 in the membership information of the cardholder 210 stored in the member DB 14a has been changed to the phone number of the unauthorized user 220. Alternatively, the unauthorized user 220 may have obtained the user phone 4-1 in an unauthorized manner. Further, the voiceprint information of the cardholder 210 in the membership information of the cardholder 210 has been overwritten with the voiceprint information of the unauthorized user 220. For example, the unauthorized user 220 may have registered the voiceprint of the unauthorized user 220, using the information of the cardholder 210 and the information about the credit card obtained in an unauthorized manner. The unauthorized user 220 attempts to purchase an item for sale using the credit card at the store 310 (step S71). The payment terminal 2-1 placed in the store 310 transmits the payment information to the payment server 1 (step S72) . The payment server 1 makes a phone call to the unauthorized user 220 on the basis of the phone number of the unauthorized user 220 included in the membership information of the cardholder 210. When the payment server 1 is connected with the user phone 4-2, the payment server 1 transmits inquiry voice information to the user phone 4-2 (step S73). The unauthorized user 220 utters the word "Yes" representing affirmation, and the user phone 4-1 transmits, to the payment server 1, answer voice information indicating an answer voice representing affirmation (step S74). The voiceprint of the voice indicated by the answer voice information corresponds to the voiceprint of the unauthorized user 220 indicated by the voiceprint information stored in the member DB 14a, and the answer voice represents affirmation. Therefore, the payment server 1 gives permission for the payment. The payment server 1 executes the payment processing, and transmits a response indicating authorization OK to the payment terminal 2-1 (step S75) . The store clerk of the store 310 hands the item for sale to the unauthorized user 220. Thereafter, the cardholder 210 checks the usage statement of the credit card (step S77). For example, the cardholder 210 may review the usage statement on the member's website. Alternatively, the usage statement may be mailed to the cardholder 210. The cardholder who has reviewed the usage statement finds a transaction considered to be unauthorized use. Then, the cardholder reports the unauthorized use to the call center (step S78) . As a result, the billing is canceled for the transaction performed by the unauthorized user 220. The payment server 1 generates voiceprint information from the answer voice information received from the user phone 4-2. The payment server 1 stores the voiceprint information in the voiceprint blacklist DB 14c (step S79) .

The evidence voice information storage control unit 123 may store, in the payment history DB 14b, answer voice information received by the voice information reception unit 115, in association with payment information, as information indicating evidence that a presumed requester affirmed or negated the payment processing. As a result, the credit card company can refuse cancellation of billing on the basis of the stored answer voice information, in a case where the presumed requester requested the cancellation of the billing with the payment processing even though the presumed requester indicated affirmation.

For example, it is assumed that a cardholder utters a word representing affirmation to the user phone 4, in authorization using telephone. Thus, answer voice information indicates a voice representing affirmation. Thereafter, it is assumed that the cardholder reports to the call center that the transaction for which the payment processing has been performed is an unauthorized transaction. An operator may input, in the operator terminal 6, the information provided from the cardholder, and may inquire of the payment server 1 about the transaction corresponding to the provided information. The payment server 1 may search the payment history DB 14b for the payment information and the determination result information. The payment server 1 may transmit the answer voice information included in the found determination result information to the operator terminal 6. The operator terminal 6 may output the answer voice indicated by the answer voice information from the speaker. When determination is made that the answer voice represents affirmation, the operator may transfer the call between the operator phone 5 and the user phone 4 to the payment server 1. The payment server 1 may transmit the answer voice information to the user phone 4 to cause the answer voice to be output by the user phone 4 as evidence. Thereafter, the payment server 1 may transfer the call between the payment server 1 and the user phone 4 to the operator phone 5. Then, the operator may notify the cardholder that the cancellation of the billing is refused.

In a case where the payment permission determination unit 119 determines not to give permission for payment processing, the connection control unit 113 may cause the user phone 4 to be connected with the operator phone 5 for voice communication. That is, the connection control unit 113 may transfer a call between the payment server 1 and the user phone 4 to the operator phone 5. As a result, it is possible to provide relief to a user who is dissatisfied with the determination result. For example, there is a possibility that the user's current voiceprint has changed. There is a possibility that the user provides a wrong answer. In these cases, there is a possibility that the payment processing is not permitted. The connection control unit 113 may request the PBX 7 to transfer a call, for example. For example, after the payment permission determination unit 119 determines not to give permission for the payment processing, the connection control unit 113 may transmit, to the user phone 4, voice information inquiring whether to transfer a call to the operator. For example, the voice information may represent a message stating "The payment has been refused. If you think that this determination is incorrect, we will connect you to an operator. To connect to an operator, please press 1". The connection control unit 113 may cause the user phone 4 to be connected with the operator phone 5 in response to the operation of a cardholder on the user phone 4. The cardholder then explains circumstances. The operator who has heard the circumstances may give permission for the payment processing. The operator who has given permission for the payment processing may operate the operator terminal 6 to request the payment server 1 to execute the payment processing and to correct the determination result information. Further, the voiceprint of the cardholder may be re-registered as necessary.

### 4. Operation of Electronic Communication System

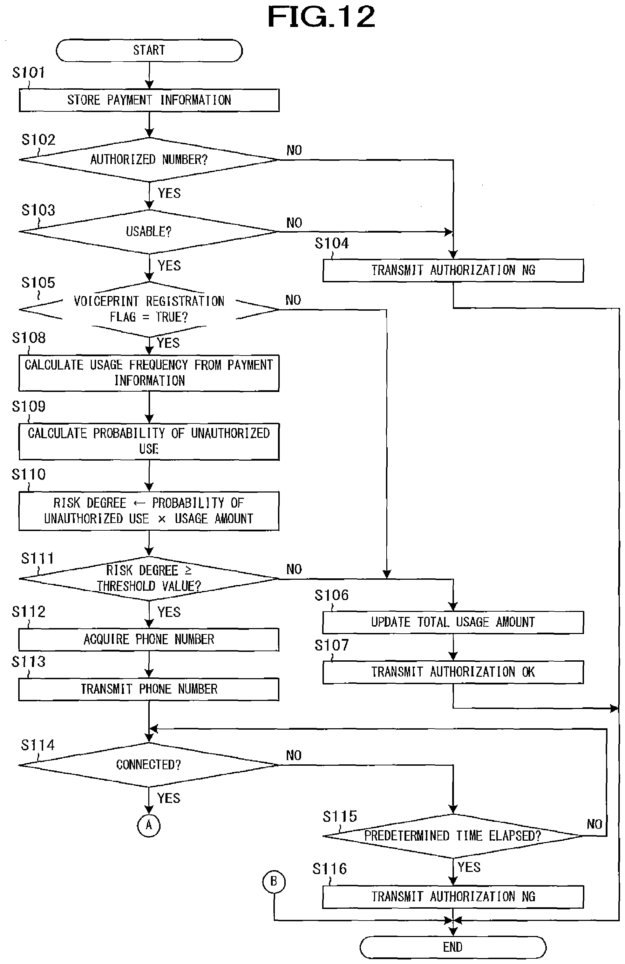

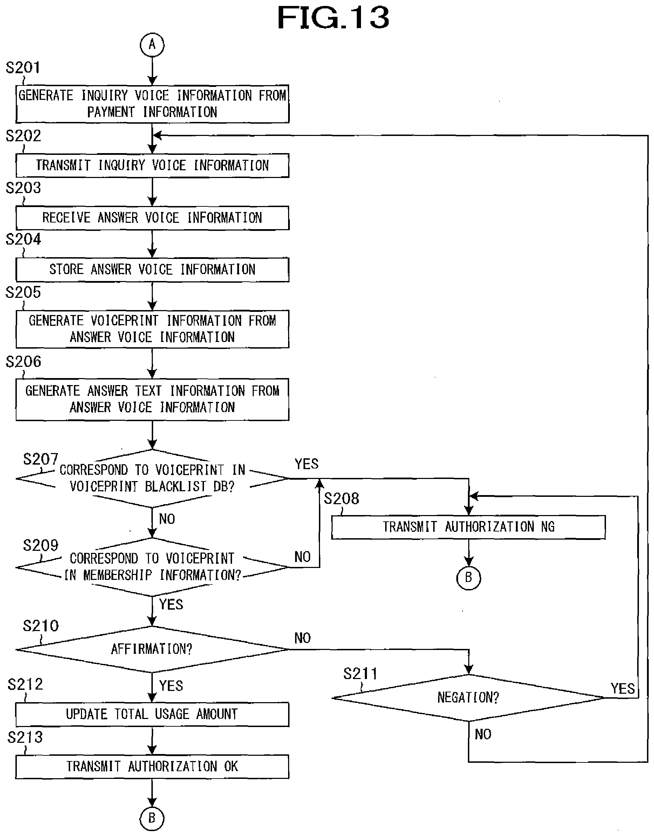

Next, the operation of the electronic communication system S will be described with reference to FIGS. 12 and 13. FIGS. 12 and 13 are flowcharts illustrating an example of authorization processing executed by the system controller 11 of the payment server 1. In response to the payment server 1 receiving the payment information from the payment terminal 2 or the electronic commerce server 3, the system controller 11 may execute authorization processing. The system controller 11 executes the authorization processing according to each program code included in the server program stored in the storage unit 14.

As illustrated in FIG. 12, the payment information acquisition unit 111 stores the received payment information in the payment history DB 14b (step S101). Next, the payment permission determination unit 119 determines whether a card number and an expiration date included in the payment information are authorized information (step S102) . For example, the payment permission determination unit 119 may search the member DB 14a for a combination identical to a combination of the card number and the expiration date included in the payment information. In a case where the identical combination is found, the payment permission determination unit 119 may determine that the card number and the expiration date included in the payment information are authorized information. In a case where the identical combination is not found, the payment permission determination unit 119 may determine that the card number and the expiration date included in the payment information are not authorized information.

In a case where the card number and the expiration date included in the payment information are authorized information (step S102: YES), the payment permission determination unit 119 determines whether the credit card is usable (step S103). For example, in a case where the expiration date has elapsed, the payment permission determination unit 119 may determine that the credit card is not usable. In addition, the payment permission determination unit 119 may acquire membership information including a card number identical to the card number included in the payment information from the member DB 14a. The payment permission determination unit 119 may acquire the limit amount and the total usage amount from the membership information. The payment permission determination unit 119 may calculate the estimated total usage amount by adding the usage amount included in the payment information to the total usage amount. In a case where the estimated total usage amount exceeds the limit amount, the payment permission determination unit 119 may determine that the credit card is not usable. In a case where the expiration date has not elapsed and the estimated total usage amount does not exceed the limit amount, the payment permission determination unit 119 may determine that the credit card is usable.

In a case where the card number and the expiration date included in the payment information are not authorized information (step S102: NO), or in a case where the credit card is not usable (step S103: NO), the payment permission determination unit 119 transmits authorization NG to the payment terminal 2 or the electronic commerce server 3 that has transmitted the payment information (step S104). In addition, the payment permission determination unit 119 stores the determination result information in the payment history DB 14b, in association with the payment information stored in step S101. At this time, the payment permission determination unit 119 sets the payment permission flag to FALSE. In addition, the payment permission determination unit 119 sets the payment non-permission reason information to information according to the determination result of step S102 or step S103. When step S104 ends, the authorization processing ends.

In a case where the credit card is usable (step S103: YES), the payment permission determination unit 119 determines whether the voiceprint registration flag included in the acquired membership information indicates TRUE (step S105) .

In a case where the voiceprint registration flag indicates FALSE (step S105: NO), the payment permission determination unit 119 gives permission for the payment. In the member DB 14a, the payment permission determination unit 119 updates the total usage amount included in the membership information including the card number identical to the card number included in the payment information, with the estimated total usage amount (step S106). In addition, the payment permission determination unit 119 stores the determination result information in the payment history DB 14b, in association with the payment information stored in step S101. At this time, the payment permission determination unit 119 sets the payment permission flag to TRUE. In addition, the payment permission determination unit 119 sets the telephone authorization flag to FALSE. Further, the payment permission determination unit 119 sets the statement closing date. Still further, the payment permission determination unit 119 sets the billing cancellation flag to FALSE.

Next, the payment permission determination unit 119 transmits authorization OK to the payment terminal 2 or the electronic commerce server 3 that has transmitted the payment information (step S107), and the authorization processing ends.

In a case where the voiceprint registration flag indicates TRUE (step S105: YES), the risk degree determination unit 120 calculates a usage frequency from the received payment information (step S108). For example, the risk degree determination unit 120 may acquire the usage date, the card number, and the payee information from the received payment information. The risk degree determination unit 120 may determine the first day of a period by subtracting a predetermined number of days from the acquired usage date. The risk degree determination unit 120 may search the payment history DB 14b for one or more pieces of payment information each including the combination identical to the combination of the card number and the payee information included in the received payment information, from among pieces of payment information each including a usage date on and after the first day of the period. The risk degree determination unit 120 may count the number of pieces of found payment information as the usage frequency.

Next, the risk degree determination unit 120 calculates a probability of unauthorized use by inputting the usage frequency in the risk degree calculation model 14d (step S109). Next, the risk degree determination unit 120 calculates a risk degree by multiplying the probability of unauthorized use by the usage amount included in the received payment information (step S110). Next, the risk degree determination unit 120 determines whether the risk degree is equal to or greater than a threshold value (step Sill) . In a case where the risk degree is smaller than the threshold value (step Sill: NO), the processing proceeds to step S106.

In a case where the risk degree is equal to or greater than the threshold value (step Sill: YES), the phone number acquisition unit 112 acquires the phone number from the membership information acquired from the member DB 14a (step S112). Next, the connection control unit 113 transmits the acquired phone number to the PBX 7 (step S113) . By performing this, the connection control unit 113 requests connection between the payment server 1 and the user phone 4 corresponding to the phone number.

Next, the connection control unit 113 determines whether the payment server 1 is connected with the user phone 4 (step S114) . In a case where the connection is not made (step S114: NO), the connection control unit 113 determines whether a predetermined time has elapsed since the transmission of the phone number (step S115) . In a case where the predetermined time has not elapsed (step S115: NO), the processing proceeds to step S114. In a case where the predetermined time has elapsed (step S115: YES), the connection control unit 113 cancels the connection request. Then, the payment permission determination unit 119 transmits authorization NG to the payment terminal 2 or the electronic commerce server 3 that has transmitted the payment information (step S116). In addition, the payment permission determination unit 119 stores the determination result information in the payment history DB 14b, in association with the payment information stored in step S101. At this time, the payment permission determination unit 119 sets the payment permission flag to FALSE. In addition, the payment permission determination unit 119 sets the payment non-permission reason information to information indicating that the authorization using telephone has failed. Further, the payment permission determination unit 119 sets the telephone authorization flag to TRUE. When step S116 ends, the authorization processing ends.

In a case where the payment server 1 is connected with the user phone 4 (step S114: YES), as illustrated in FIG. 13, the voice information transmission unit 114 generates inquiry voice information, on the basis of the received payment information (step S201). For example, the voice information transmission unit 114 may acquire the usage date, the usage time, and the usage amount from the payment information. The voice information transmission unit 114 may generate, using voice synthesis, voice information indicating a voice representing the usage date, voice information indicating a voice representing the usage time, and voice information indicating a voice representing the usage amount. The voice information transmission unit 114 may generate the inquiry voice information by connecting the generated voice information with voice information indicating a voice representing a predetermined message. The voice information transmission unit 114 transmits the generated inquiry voice information to the user phone 4 (step S202) .

Next, the voice information reception unit 115 receives answer voice information from the user phone 4 (step S203) . Next, the evidence voice information storage control unit 123 stores the received answer voice information in the payment history DB 14b, in association with the payment information stored in step S101 (step S204). Next, the speaker determination unit 117 generates voiceprint information indicating a voiceprint of the answer voice, from the answer voice information, using speaker recognition (step S205). Next, the speech determination unit 118 generates answer text information indicating a word represented by the answer voice, from the answer voice information, using speech recognition (step S206) .

Next, the speaker determination unit 117 determines whether voiceprint information indicating a voiceprint corresponding to the voiceprint indicated by the generated voiceprint information is stored in the voiceprint blacklist DB 14c (step S207). For example, the speaker determination unit 117 may calculate, using speaker recognition, similarity between the generated voiceprint information and each piece of voiceprint information stored in the voiceprint blacklist DB 14c. In a case where there is voiceprint information having similarity of a predetermined value or greater, the speaker determination unit 117 may determine that the voiceprint information indicating the voiceprint corresponding to the voiceprint indicated by the generated voiceprint information is stored. In a case where there is no voiceprint information having the similarity of a predetermined value or greater, the speaker determination unit 117 may determine that the voiceprint information indicating the voiceprint corresponding to the voiceprint indicated by the generated voiceprint information is not stored.

In a case where the voiceprint information indicating the voiceprint corresponding to the voiceprint indicated by the generated voiceprint information is stored (step S207: YES), the payment permission determination unit 118 transmits authorization NG to the payment terminal 2 or the electronic commerce server 3 that has transmitted the payment information (step S208). In addition, the connection control unit 113 disconnects the call. Further, the payment permission determination unit 119 stores the determination result information in the payment history DB 14b, in association with the payment information stored in step S101. At this time, the payment permission determination unit 119 sets the payment permission flag to FALSE. In addition, the payment permission determination unit 119 sets the payment non-permission reason information to information indicating that the authorization using telephone has failed. Further, the payment permission determination unit 119 sets the telephone authorization flag to TRUE. Still further, the payment permission determination unit 119 sets the voiceprint determination result information to NG. Yet further, the payment permission determination unit 119 sets answer information according to the answer text information. When step S208 ends, the authorization processing ends.

In a case where the voiceprint information indicating the voiceprint corresponding to the voiceprint indicated by the generated voiceprint information is not stored (step S207: NO), the voiceprint information acquisition unit 116 acquires voiceprint information from the acquired membership information. The speaker determination unit 117 determines whether the voiceprint indicated by the generated voiceprint information and a voiceprint indicated by the voiceprint information acquired from the membership information correspond (step S209). For example, the speaker determination unit 117 may calculate, using speaker recognition, similarity between the generated voiceprint information and the voiceprint information included in the membership information. In a case where the similarity is equal to or greater than a predetermined value, the speaker determination unit 117 may determine that the voiceprints correspond. In a case where the similarity is smaller than the predetermined value, the speaker determination unit 117 may determine that the voiceprints do not correspond. In a case where the voiceprints do not correspond (step S209: NO), the processing proceeds to step S208.

In a case where the voiceprints correspond (step S209: YES), the speech determination unit 118 determines whether the word indicated by the answer text information represents affirmation (step S210). For example, the speech determination unit 118 may make the determination by comparing the answer text information with text information indicating a word representing affirmation.

In a case where the word indicated by the answer text information does not represent affirmation (step S210: NO), the speech determination unit 118 determines whether the word indicated by the answer text information represents negation (step S211). For example, the speech determination unit 118 may make the determination by comparing the answer text information with text information indicating a word representing negation. In a case where the word indicated by the answer text information represents negation (step S211: YES), the processing proceeds to step S208. Here, the payment permission determination unit 119 sets the voiceprint determination result information to OK. In a case where the word indicated by the answer text information does not represent negation (step S211: NO), the processing proceeds to step S202.

In a case where the word indicated by the answer text information represents affirmation (step S210: YES), the payment permission determination unit 119 gives permission for the payment, and updates the total usage amount (step S212). The method of updating the total usage amount may be the same as that in step S106. In addition, the connection control unit 113 disconnects the call. Further, the payment permission determination unit 119 stores the determination result information in the payment history DB 14b, in association with the payment information stored in step S101. At this time, the payment permission determination unit 119 sets the payment permission flag to TRUE. In addition, the payment permission determination unit 119 sets the telephone authorization flag to TRUE. Further, the payment permission determination unit 119 sets the voiceprint determination result information to OK. Still further, the payment permission determination unit 119 sets the answer information to information indicating affirmation. Yet further, the payment permission determination unit 119 sets the statement closing date. Yet still further, the payment permission determination unit 119 sets the billing cancellation flag to FALSE.

Next, the payment permission determination unit 119 transmits authorization OK to the payment terminal 2 or the electronic commerce server 3 that has transmitted the payment information (step S213), and the authorization processing ends.

As described above, according to the present embodiment, the payment server 1 acquires payment information. In addition, the payment server 1 acquires, on the basis of a card number included in the payment information, the phone number of a presumed requester. Further, the payment server 1 cause, on the basis of the acquired phone number, the payment server 1 to be connected with the user phone 4 of a second user identified by the phone number, for a phone call. In addition, the payment server 1 receives answer voice information from the user phone 4 connected with the payment server 1. Further, the payment server 1 acquires, on the basis of the card number included in the payment information, voiceprint information of the presumed requester. In addition, the payment server 1 determines whether the feature of an answer voice indicated by the answer voice information and the feature of a voice indicated by the acquired voiceprint information correspond. Further, the payment server 1 determines whether the answer voice indicated by the answer voice information represents predetermined information. In addition, the payment server 1 determines, on the basis of these determinations, whether to give permission for predetermined payment information. Therefore, it is possible to identify a user and check additional information while reducing a burden on the user. Further, a voiceprint is information specific to an individual, and one person has one voiceprint. Thus, unlike a phone number or an e-mail address, one person cannot have a plurality of voiceprints. Therefore, an unauthorized user cannot continue to perform an unauthorized action using a plurality of voiceprints. In addition, while the unauthorized user can take over an account of another person's e-mail by unauthorized access, the unauthorized user cannot take over the other person's voiceprint.

Here, the payment server 1 may determine whether the answer voice indicated by the answer voice information represents affirmation or negation. In this case, it is possible to identify the user and confirm whether the user has requested specific processing while reducing a burden on the user.

Further, the payment server 1 may give permission for the predetermined payment information in a case where the features of the voices correspond to each other and the answer voice represents affirmation. In this case, the predetermined payment information is permitted in a case where the user of the user phone 4 is the presumed requester and the user utters the voice representing affirmation.

Further, the payment server 1 may determine not to give permission for the predetermined payment information in a case where the features of the voices correspond to each other and the answer voice represents negation. In this case, even in a case where the user of the user phone 4 is the presumed requester, the predetermined payment information is not permitted in a case where the user utters the voice representing negation.

Further, the payment server 1 may determine not to give permission for the predetermined payment information in a case where the features of the voices do not correspond to each other and the answer voice represents affirmation. In this case, the predetermined payment information is not permitted in a case where the user of the user phone 4 is a person different from the presumed requester even in a case where the user utters the voice representing affirmation.

In addition, the payment server 1 may determine, on the basis of the payment information, a degree of risk in executing the predetermined payment information. Further, in a case where the determined degree is equal to or greater than a threshold value, the payment server 1 may cause the payment server 1 to be connected with the user phone 4, and may determine, on the basis of the determination using the features of the voices and the determination of which the voice represents, whether to give permission for the predetermined payment information. In addition, in a case where the determined degree is smaller than the threshold value, the payment server 1 may not cause the payment server 1 to be connected with the user phone 4, and may determine to give permission for the predetermined payment information. In this case, the determination using the answer voice information is made only in a case where the risk is high. Thus, it is possible to reduce at least one of a burden on the user or a processing load on the payment server 1.

Here, the payment server 1 may generate, using machine learning, the risk degree calculation model 14d that outputs past risk degree information indicating a degree of past risk in executing past payment processing, by using a plurality of combinations of payment information indicating details of a request for the past payment processing for which whether to give permission was determined in the past and determination information indicating whether the past payment processing was determined to be requested by a person different from a past presumed requester. Further, the payment server 1 may cause, on the basis of the payment information acquired for the predetermined payment processing, risk degree information to be output from the generated risk degree calculation model 14d. In this case, it is possible to appropriately determine the degree of risk using machine learning.

Here, the details indicated by the payment information in the past payment processing may include at least one of a usage date or a usage time, and a payee. In addition, the payment server 1 may calculate, on the basis of the payment information in the past payment processing, a frequency at which the same past presumed requester requested the past payment processing for the same identical payee. Further, the payment server 1 may generate the risk degree calculation model 14d using the frequency and the determination information. In this case, it is possible to appropriately determine the degree of risk by generating the risk degree calculation model 14d using this frequency.

In addition, the payment information may include a usage amount. Further, the payment server 1 may determine, as a degree of risk, an expected value for an amount to be paid in response to the person different from the presumed requester requesting the payment processing. In this case, it is possible to reduce at least one of a burden on the user or a processing load on the payment server 1 while reducing damage caused by money or the like being paid in an unauthorized manner.

In addition, the payment server 1 may acquire, from the member DB 14a, a phone number associated with a card number matching the card number included in the payment information, as the phone number of the presumed requester. Further, the payment server 1 may acquire, from the member DB 14a, voiceprint information associated with a card number matching the card number included in the payment information, as the voiceprint information of the presumed requester. In this case, it is possible to acquire a phone number necessary for a phone call and voiceprint information necessary for the determination from the member DB 14a that stores the information of the user who can use the predetermined credit card.

In addition, the payment server 1 may transmit inquiry voice information to the user phone 4 connected with the payment server 1. In this case, the user phone 4 outputs, on the basis of the inquiry voice information, a voice prompting a statement of either affirmation or negation. With this output, it is possible to notify the user of what should be answered.

Here, the voice indicated by the inquiry voice information may include a voice representing at least one of the details indicated by the payment information. In this case, the user phone 4 outputs a voice representing at least one of the details of the request for the payment processing. With this output, it is possible to make the user of the user phone 4 understand whether the user is a person who has requested the predetermined processing.

Here, the payment information may include at least one of a usage date, a usage time, or a usage amount. In this case, the user phone 4 outputs a voice representing at least one of the usage date, the usage time, or the usage amount. With this output, it is possible to make the user of the user phone 4 understand whether the user is a person who has requested the payment processing.

Further, in a case where the payment processing is found not to be processing requested by the presumed requester after the payment server 1 determines to give permission for the payment processing, the payment server 1 may store information indicating the voiceprint of the answer voice in the voiceprint blacklist DB 14c as voiceprint information indicating a feature of a voice for which the payment processing will not be permitted in the future. In this case, it is possible to prevent recurring unauthorized use caused by an unauthorized user impersonating the presumed requester by registering voiceprint information in an unauthorized manner.

In addition, the payment server 1 may store, in the payment history DB 14b, the answer voice information received from the user phone 4 in association with the payment information, as information indicating evidence that the presumed requester affirmed or negated the payment processing. In this case, it is possible to avoid unnecessary trouble between a credit card company and the presumed requester.

In addition, in a case where the payment server 1 determines not to give permission for the payment processing, the payment server 1 may connect the user phone 4 with an operator communication device for voice communication. In this case, the user of the user phone 4 can talk with an operator in a case where the user has a complaint on the determination made by the payment server 1.

### 5. Another Embodiment

In the above embodiment, the predetermined information indicates affirmation of the predetermined processing. Then, the information processing system determines whether the answer voice indicated by the answer voice information represents affirmation or negation. However, the predetermined information may be authentication information for authenticating a presumed requester. This authentication information may be information for authenticating the presumed requester if the presumed requester knows the authentication information. Examples of the authentication information include a personal identification number, a password, a secret word, and the like. Usually, the authentication information of a presumed requester is information known only by the presumed requester, and is information not known by other outsiders. Thus, the presumed requester presents a fact that he/she know the authentication information and the presumed requester is consequently authenticated. The first user identification, such as a membership number, a user ID, or the like, is information that may be known to outsiders. The information processing system may store, for each user, the first user identification information and the authentication information in association with each other in a predetermined storage means. Then, the information processing system may acquire, from the storage means, the authentication information associated with the first user identification information of the presumed requester.

The information processing system may determine whether the answer voice indicated by the answer voice information represents the authentication information. Then, the information processing system may give permission for the predetermined processing in a case where it is determined that the features of the voices correspond and it is determined that the answer voice represents the authentication information. In addition, the information processing system may not give permission for the predetermined processing in a case where it is determined that the features of the voices correspond and it is determined that the answer voice does not represent the authentication information. Further, the information processing system may not give permission for the predetermined processing, in a case where it is determined that the features of the voices do not correspond and it is determined that the answer voice represents the authentication information.

As described above, according to the present embodiment, it is possible to reduce a burden for two-factor input in multi-factor authentication.

(Appendix 1) An information processing system for permitting predetermined processing, the system comprising: a processing information acquisition means that acquires processing information indicating details of a request for the predetermined processing and including requester identification information for identifying a presumed requester presumed to request the predetermined processing as a user who can use the information processing system; a requester voice communication identification information acquisition means that acquires, based on the requester identification information included in the acquired processing information, requester voice communication identification information for identifying the presumed requester in a voice communication system enabling voice communication; a connection control means that causes, based on the acquired requester voice communication identification information, the information processing system to be connected with a user communication device of the presumed requester for the voice communication; a voice information reception means that receives voice information indicating a first voice input in the user communication device from the user communication device connected with the information processing system for the voice communication; a requester voice feature information acquisition means that acquires, based on the requester identification information included in the acquired processing information, requester voice feature information indicating a feature of a second voice of the presumed requester; a feature determination means that determines whether a feature of the first voice indicated by the received voice information and the feature of the second voice indicated by the acquired requester voice feature information correspond; a speech determination means that determines whether the first voice indicated by the received voice information represents predetermined information; and a permission determination means that determines, based on the determination by the feature determination means and the determination by the speech determination means, whether to permit the predetermined processing.

(Appendix 2) The information processing system according to appendix 1, wherein the predetermined information indicates affirmation of the predetermined processing, the first voice indicated by the received voice information represents either the affirmation or negation of the predetermined processing, and the speech determination means determines whether the first voice indicated by the received voice information represents the affirmation or the negation.

(Appendix 3) The information processing system according to appendix 1, wherein the predetermined information is authentication information for authenticating the presumed requester if the presumed requester knows the authentication information.

(Appendix 4) The information processing system according to any one of appendixes 1 to 3, wherein the permission determination means determines to permit the predetermined processing when the feature of the first voice and the feature of the second voice correspond and the first voice represents the predetermined information.

(Appendix 5) The information processing system according to any one of appendixes 1 to 4, wherein the permission determination means determines not to permit the predetermined processing when the feature of the first voice and the feature of the second voice correspond and the first voice does not represent the predetermined information.

(Appendix 6) The information processing system according to any one of appendixes 1 to 5, wherein the permission determination means determines not to permit the predetermined processing when the feature of the first voice and the feature of the second voice do not correspond and the first voice represents the predetermined information.

(Appendix 7) The information processing system according to any one of appendixes 1 to 6, further comprising a risk degree determination means that determines, based on the acquired processing information, a degree of risk in executing the predetermined processing, the degree of risk changing in accordance with a probability that the predetermined processing is requested by a person different from the presumed requester, wherein when the determined degree is equal to or greater than a predetermined value, the connection control means causes the information processing system to be connected with the user communication device, and the permission determination means determines whether to permit the predetermined processing based on the determination by the feature determination means and the determination by the speech determination means, and when the determined degree is smaller than the predetermined value, the connection control means does not cause the information processing system to be connected with the user communication device, and the permission determination means determines to permit the predetermined processing.

(Appendix 8) The information processing system according to appendix 7, further comprising a generation means that generates, using machine learning, a model that outputs past risk degree information by using a plurality of combinations of past processing information and determination information, the past processing information indicating details of a request for past processing that is predetermined processing for which whether to give permission was determined in a past, the past processing information including past requester identification information for identifying a past presumed requester who was presumed to request the past processing, the determination information indicating whether the past processing was determined to be requested by a person different from the past presumed requester, the past risk degree information indicating a degree of past risk in executing the past processing, the degree of past risk changing in accordance with a probability that the past processing is requested by the person different from the past presumed requester, wherein the risk degree determination means causes, based on the acquired processing information, risk degree information indicating the degree of risk to be output from the generated model.

(Appendix 9) The information processing system according to appendix 8, wherein the predetermined processing includes processing for the presumed requester to pay a medium of exchange to a payee, and the details indicated by the past processing information include at least one of a date when the past processing was requested or a time when the past processing was requested, and the payee.

(Appendix 10) The information processing system according to appendix 9, wherein the generation means calculates, based on the past processing information, a frequency at which the same past presumed requester requested the past processing for the same payee, and generates the model using the frequency and the determination information.

(Appendix 11) The information processing system according to any one of appendixes 7 to 10, wherein the predetermined processing includes processing for the presumed requester to pay a medium of exchange, the processing information further includes an amount of the medium of exchange to be paid, and the degree of risk to be determined indicates an expected value for an amount of a medium of exchange to be paid in response to the person different from the presumed requester requesting the predetermined processing.

(Appendix 12) The information processing system according to any one of appendixes 7 to 11, wherein first user identification information for identifying a first user who can use the information processing system, second user identification information for identifying the first user as a second user who can use the voice communication system, and voice feature information indicating a feature of a voice of the first user are stored in association with one another in a storage means, the requester voice communication identification information acquisition means acquires, as the requester voice communication identification information, the second user identification information associated with the first user identification information matching the acquired requester identification information from the storage means, and the requester voice feature information acquisition means acquires, as the requester voice feature information, the voice feature information associated with the first user identification information matching the acquired requester identification information from the storage means.

(Appendix 13) The information processing system according to appendix 2, further comprising a voice information transmission means that transmits, to the user communication device connected with the information processing system for the voice communication, prompting voice information indicating a voice prompting a statement of either the affirmation or the negation.

(Appendix 14) The information processing system according to appendix 13, wherein the voice indicated by the prompting voice information includes a voice representing at least one of the details indicated by the processing information.

(Appendix 15) The information processing system according to appendix 14, wherein the predetermined processing includes processing for the presumed requester to pay a medium of exchange, and the details indicated by the processing information include at least one of a date when the predetermined processing has been requested, a time when the predetermined processing has been requested, or an amount of the medium of exchange to be paid.

(Appendix 16) The information processing system according to any one of appendixes 1 to 15, wherein when the predetermined processing is found not to be processing requested by the presumed requester after the permission determination means determines to permit the predetermined processing, the information processing system stores information indicating the feature of the first voice in a non-permission voice feature information storage means as non-permission voice feature information indicating a feature of a voice for which the permission determination means will not permit the predetermined processing in a future.

(Appendix 17) The information processing system according to appendix 2, further comprising an evidence information storage control means that stores, as evidence information indicating evidence that the presumed requester affirmed or negated the predetermined processing, the received voice information in an evidence information storage means in association with the processing information.

(Appendix 18) The information processing system according to any one of appendixes 1 to 17, further comprising a second connection control means that causes, for the voice communication, the user communication device to be connected with an operator communication device of an operator that receives an inquiry about the predetermined processing when the permission determination means determines not to permit the predetermined processing.

(Appendix 19) The information processing system according to any one of appendixes 1 to 18, wherein the requester voice communication identification information is a phone number, and the user communication device has a telephone function.

(Appendix 20) The information processing system according to any one of appendixes 1 to 19, wherein the predetermined processing is payment using a predetermined payment method.

(Appendix 21) The information processing system according to appendix 20, wherein the predetermined payment method is payment using a credit card, and the requester identification information is a number of the credit card.

(Appendix 22) An information processing method to be performed by at least one computer of an information processing system for permitting predetermined processing, the method comprising: a processing information acquisition step of acquiring processing information indicating details of a request for the predetermined processing and including requester identification information for identifying a presumed requester presumed to request the predetermined processing as a user who can use the information processing system; a requester voice communication identification information acquisition step of acquiring, based on the requester identification information included in the acquired processing information, requester voice communication identification information for identifying the presumed requester in a voice communication system enabling voice communication; a connection control step of causing, based on the acquired requester voice communication identification information, the information processing system to be connected with a user communication device of the presumed requester for the voice communication; a voice information reception step of receiving voice information indicating a first voice input in the user communication device from the user communication device connected with the information processing system for the voice communication; a requester voice feature information acquisition step of acquiring, based on the requester identification information included in the acquired processing information, requester voice feature information indicating a feature of a second voice of the presumed requester; a feature determination step of determining whether a feature of the first voice indicated by the received voice information and the feature of the second voice indicated by the acquired requester voice feature information correspond; a speech determination step of determining whether the first voice indicated by the received voice information represents predetermined information; and a permission determination step of determining, based on the determination in the feature determination step and the determination in the speech determination step, whether to permit the predetermined processing.

(Appendix 23) An information processing program causing at least one computer of an information processing system for permitting predetermined processing to function as: a processing information acquisition means that acquires processing information indicating details of a request for the predetermined processing and including requester identification information for identifying a presumed requester presumed to request the predetermined processing as a user who can use the information processing system; a requester voice communication identification information acquisition means that acquires, based on the requester identification information included in the acquired processing information, requester voice communication identification information for identifying the presumed requester in a voice communication system enabling voice communication; a connection control means that causes, based on the acquired requester voice communication identification information, the information processing system to be connected with a user communication device of the presumed requester for the voice communication; a voice information reception means that receives voice information indicating a first voice input in the user communication device from the user communication device connected with the information processing system for the voice communication; a requester voice feature information acquisition means that acquires, based on the requester identification information included in the acquired processing information, requester voice feature information indicating a feature of a second voice of the presumed requester; a feature determination means that determines whether a feature of the first voice indicated by the received voice information and the feature of the second voice indicated by the acquired requester voice feature information correspond; a speech determination means that determines whether the first voice indicated by the received voice information represents predetermined information; and a permission determination means that determines, based on the determination by the feature determination means and the determination by the speech determination means, whether to permit the predetermined processing.

### Reference Signs List

- 1: payment server
- 2: payment terminal
- 3: electronic commerce server
- 4: user phone
- 5: operator phone
- 6: operator terminal
- 7: PBX
- 11: system controller
- 12: system bus
- 13: input/output interface
- 14: storage unit
- 14a: member DB
- 14b: payment history DB
- 14c: voiceprint blacklist DB
- 14d, 14e: risk degree calculation model
- 111: payment information acquisition unit
- 112: phone number acquisition unit
- 113: connection control unit
- 114: voice information transmission unit
- 115: voice information reception unit
- 116: voiceprint information acquisition unit
- 117: speaker determination unit
- 118: speech determination unit
- 119: payment permission determination unit
- 120: risk degree determination unit
- 121: risk degree calculation model generation unit
- 122: unauthorized voiceprint information storage control unit
- 123: evidence voice information storage control unit
- 15: data communication unit
- 16: voice communication unit
- NW1, NW2: network
- S: electronic communication system

## Claims

1. An information processing system for permitting predetermined processing, the system comprising:
a processing information acquisition means that acquires processing information indicating details of a request for the predetermined processing and including requester identification information for identifying a presumed requester presumed to request the predetermined processing as a user who can use the information processing system;
a requester voice communication identification information acquisition means that acquires, based on the requester identification information included in the acquired processing information, requester voice communication identification information for identifying the presumed requester in a voice communication system enabling voice communication;
a connection control means that causes, based on the acquired requester voice communication identification information, the information processing system to be connected with a user communication device of the presumed requester for the voice communication;
a voice information reception means that receives voice information indicating a first voice input in the user communication device from the user communication device connected with the information processing system for the voice communication;
a requester voice feature information acquisition means that acquires, based on the requester identification information included in the acquired processing information, requester voice feature information indicating a feature of a second voice of the presumed requester;
a feature determination means that determines whether a feature of the first voice indicated by the received voice information and the feature of the second voice indicated by the acquired requester voice feature information correspond;
a speech determination means that determines whether the first voice indicated by the received voice information represents predetermined information; and
a permission determination means that determines, based on the determination by the feature determination means and the determination by the speech determination means, whether to permit the predetermined processing.

2. The information processing system according to claim 1, wherein
the predetermined information indicates affirmation of the predetermined processing,
the first voice indicated by the received voice information represents either the affirmation or negation of the predetermined processing, and
the speech determination means determines whether the first voice indicated by the received voice information represents the affirmation or the negation.

3. The information processing system according to claim 1, wherein the predetermined information is authentication information for authenticating the presumed requester if the presumed requester knows the authentication information.

4. The information processing system according to any one of claims 1 to 3, wherein the permission determination means determines to permit the predetermined processing when the feature of the first voice and the feature of the second voice correspond and the first voice represents the predetermined information.

5. The information processing system according to any one of claims 1 to 3, wherein the permission determination means determines not to permit the predetermined processing when the feature of the first voice and the feature of the second voice correspond and the first voice does not represent the predetermined information.

6. The information processing system according to any one of claims 1 to 3, wherein the permission determination means determines not to permit the predetermined processing when the feature of the first voice and the feature of the second voice do not correspond and the first voice represents the predetermined information.

7. The information processing system according to claim 1 or 2, further comprising a risk degree determination means that determines, based on the acquired processing information, a degree of risk in executing the predetermined processing, the degree of risk changing in accordance with a probability that the predetermined processing is requested by a person different from the presumed requester, wherein
when the determined degree is equal to or greater than a predetermined value, the connection control means causes the information processing system to be connected with the user communication device, and the permission determination means determines whether to permit the predetermined processing based on the determination by the feature determination means and the determination by the speech determination means, and
when the determined degree is smaller than the predetermined value, the connection control means does not cause the information processing system to be connected with the user communication device, and the permission determination means determines to permit the predetermined processing.

8. The information processing system according to claim 7, further comprising a generation means that generates, using machine learning, a model that outputs past risk degree information by using a plurality of combinations of past processing information and determination information, the past processing information indicating details of a request for past processing that is predetermined processing for which whether to give permission was determined in a past, the past processing information including past requester identification information for identifying a past presumed requester who was presumed to request the past processing, the determination information indicating whether the past processing was determined to be requested by a person different from the past presumed requester, the past risk degree information indicating a degree of past risk in executing the past processing, the degree of past risk changing in accordance with a probability that the past processing is requested by the person different from the past presumed requester, wherein
the risk degree determination means causes, based on the acquired processing information, risk degree information indicating the degree of risk to be output from the generated model.

9. The information processing system according to claim 8, wherein
the predetermined processing includes processing for the presumed requester to pay a medium of exchange to a payee, and
the details indicated by the past processing information include at least one of a date when the past processing was requested or a time when the past processing was requested, and the payee.

10. The information processing system according to claim 9, wherein the generation means calculates, based on the past processing information, a frequency at which the same past presumed requester requested the past processing for the same payee, and generates the model using the frequency and the determination information.

11. The information processing system according to claim 7, wherein
the predetermined processing includes processing for the presumed requester to pay a medium of exchange,
the processing information further includes an amount of the medium of exchange to be paid, and
the degree of risk to be determined indicates an expected value for an amount of a medium of exchange to be paid in response to the person different from the presumed requester requesting the predetermined processing.

12. The information processing system according to claim 1 or 2, wherein
first user identification information for identifying a first user who can use the information processing system, second user identification information for identifying the first user as a second user who can use the voice communication system, and voice feature information indicating a feature of a voice of the first user are stored in association with one another in a storage means,
the requester voice communication identification information acquisition means acquires, as the requester voice communication identification information, the second user identification information associated with the first user identification information matching the acquired requester identification information from the storage means, and
the requester voice feature information acquisition means acquires, as the requester voice feature information, the voice feature information associated with the first user identification information matching the acquired requester identification information from the storage means.

13. The information processing system according to claim 2, further comprising a voice information transmission means that transmits, to the user communication device connected with the information processing system for the voice communication, prompting voice information indicating a voice prompting a statement of either the affirmation or the negation.

14. The information processing system according to claim 13, wherein the voice indicated by the prompting voice information includes a voice representing at least one of the details indicated by the processing information.

15. The information processing system according to claim 14, wherein
the predetermined processing includes processing for the presumed requester to pay a medium of exchange, and
the details indicated by the processing information include at least one of a date when the predetermined processing has been requested, a time when the predetermined processing has been requested, or an amount of the medium of exchange to be paid.

16. The information processing system according to any one of claims 1 to 3, wherein the information processing system stores, when the predetermined processing is found not to be processing requested by the presumed requester after the permission determination means determines to permit the predetermined processing, information indicating the feature of the first voice in a non-permission voice feature information storage means as non-permission voice feature information indicating a feature of a voice for which the permission determination means will not permit the predetermined processing in a future.

17. The information processing system according to claim 2, further comprising an evidence information storage control means that stores, as evidence information indicating evidence that the presumed requester affirmed or negated the predetermined processing, the received voice information in an evidence information storage means in association with the processing information.

18. The information processing system according to any one of claims 1 to 3, further comprising a second connection control means that causes, for the voice communication, the user communication device to be connected with an operator communication device of an operator that receives an inquiry about the predetermined processing when the permission determination means determines not to permit the predetermined processing.

19. The information processing system according to any one of claims 1 to 3, wherein
the requester voice communication identification information is a phone number, and
the user communication device has a telephone function.

20. The information processing system according to any one of claims 1 to 3, wherein the predetermined processing is payment using a predetermined payment method.

21. The information processing system according to claim 20, wherein
the predetermined payment method is payment using a credit card, and
the requester identification information is a number of the credit card.

22. An information processing method to be performed by at least one computer of an information processing system for permitting predetermined processing, the method comprising:
a processing information acquisition step of acquiring processing information indicating details of a request for the predetermined processing and including requester identification information for identifying a presumed requester presumed to request the predetermined processing as a user who can use the information processing system;
a requester voice communication identification information acquisition step of acquiring, based on the requester identification information included in the acquired processing information, requester voice communication identification information for identifying the presumed requester in a voice communication system enabling voice communication;
a connection control step of causing, based on the acquired requester voice communication identification information, the information processing system to be connected with a user communication device of the presumed requester for the voice communication;
a voice information reception step of receiving voice information indicating a first voice input in the user communication device from the user communication device connected with the information processing system for the voice communication;
a requester voice feature information acquisition step of acquiring, based on the requester identification information included in the acquired processing information, requester voice feature information indicating a feature of a second voice of the presumed requester;
a feature determination step of determining whether a feature of the first voice indicated by the received voice information and the feature of the second voice indicated by the acquired requester voice feature information correspond;
a speech determination step of determining whether the first voice indicated by the received voice information represents predetermined information; and
a permission determination step of determining, based on the determination in the feature determination step and the determination in the speech determination step, whether to permit the predetermined processing.

23. An information processing program causing at least one computer of an information processing system for permitting predetermined processing to function as:
a processing information acquisition means that acquires processing information indicating details of a request for the predetermined processing and including requester identification information for identifying a presumed requester presumed to request the predetermined processing as a user who can use the information processing system;
a requester voice communication identification information acquisition means that acquires, based on the requester identification information included in the acquired processing information, requester voice communication identification information for identifying the presumed requester in a voice communication system enabling voice communication;
a connection control means that causes, based on the acquired requester voice communication identification information, the information processing system to be connected with a user communication device of the presumed requester for the voice communication;
a voice information reception means that receives voice information indicating a first voice input in the user communication device from the user communication device connected with the information processing system for the voice communication;
a requester voice feature information acquisition means that acquires, based on the requester identification information included in the acquired processing information, requester voice feature information indicating a feature of a second voice of the presumed requester;
a feature determination means that determines whether a feature of the first voice indicated by the received voice information and the feature of the second voice indicated by the acquired requester voice feature information correspond;
a speech determination means that determines whether the first voice indicated by the received voice information represents predetermined information; and
a permission determination means that determines, based on the determination by the feature determination means and the determination by the speech determination means, whether to permit the predetermined processing.
